# EUROPEAN PATENT SPECIFICATION

(11) **EP 1 757 351 B1**
(45) Date of publication and mention of the grant of the patent: **13.04.2016**
(21) Application number: 06017775.5
(22) Date of filing: 25.08.2006
(51) Int. Cl.: B01D 46/00, B01D 46/24, B01D 53/94, C04B 41/85, C04B 35/565, C04B 35/626, C04B 35/63, C04B 35/636, C04B 35/80, C04B 38/00, C04B 41/00, C04B 41/50, F01N 3/022, F01N 3/035, C04B 111/00, F01N 13/00

(54) **HONEYCOMB STRUCTURE AND MANUFACTURING METHOD THEREOF**
WABENKÖRPERSTRUKTUR UND DESSEN HERSTELLUNG
STRUCTURE EN NID D'ABEILLES ET SA FABRICATION

(30) Priority: 26.08.2005 JP 2005246286; 03.08.2006 WO PCT/JP2006/315371
(43) Date of publication of application: 28.02.2007
(73) Proprietor: IBIDEN CO., LTD., Ogaki-shi, Gifu 503-8604 (JP)
(72) Inventor: Oshimi, Yukio, Ibigawa-cho Ibi-gun Gifu 501-0695 (JP); Sato, Hiroki, Ibigawa-cho Ibi-gun Gifu 501-0695 (JP)
(74) Representative: Hoffmann Eitle

(56) References cited:
- EP-A1- 1 375 853
- EP-A1- 1 440 722
- WO-A-2005/064128
- WO-A-2005/102498

## Description

The present invention relates to a honeycomb structured body adapted to use to capture and remove matter including particulate matter contained in exhaust gases of, for example, an internal combustion engine and a boiler, and to a manufacturing method for the honeycomb structured body.

In recent years, environmental considerations have increased the necessity for removing particulate matter contained in exhaust gases of combustion apparatuses, such as an internal combustion engine and a boiler. In particular, regulations relating to removing of particulate matter (PM) including graphite particles discharged from diesel engines tend towards tightening in Europe, the United States, and Japan. A honeycomb structured body referred to as a diesel particulate filter (DPF) has been used to capture and remove matters such as PM. A honeycomb structured body is accommodated in a casing that is arranged on an exhaust passage for a combustion apparatus. The honeycomb structured body has a large number of cells that extend in the longitudinal direction of the structure. The cells are partitioned by partitions. In every pair of adjacent cells, one cell has an open end on one side and the other cell has an open end on the opposite side. The opens cells are sealed by plugs. The plugs are arranged in a lattice on each end surface (inlet side end surface and outlet side end surface) of the honeycomb structured body. Exhaust gas enters open cells at the inlet side end surface of the honeycomb structured body, flows through the porous partitions, and is discharged from adjacent open cells at the outlet side end surface. For example, PM discharged from a diesel engine is captured by the partitions that function as a filter, and accumulates on the partitions. The PM accumulating on the partitions is burned and removed by a heating means, such as a burner or a heater, or by the heat of the exhaust gas. In this specification, the burning and removing of PM is also referred to as "removing PM" or "regenerating the honeycomb structured body".

Various honeycomb structured bodies have been known (refer for example to patent documents 1 to 3). The honeycomb structured body described in document 1 has a circular cross-section and includes reinforced portions arranged at predetermined positions of its outer wall. The predetermined positions on which the reinforced parts are arranged are outer wall positions having a low strength. This honeycomb structured body has a high mechanical strength and a small pressure loss.

The honeycomb structured body described in document 2 is formed by a plurality of honeycomb members that are divided by planes parallel to the axis of the honeycomb structured body. More specifically, the honeycomb structured body is formed by eight honeycomb members having rectangular pillar shapes and four honeycomb members having isosceles right triangular cross-sections. The cross-section of the honeycomb structured body is octagonal. A sealing material is interposed between adjacent honeycomb members to integrally bond the honeycomb members.

The honeycomb structured body described in document 3 has a circular cross-section. This honeycomb structured body is obtained by combining a plurality of honeycomb members having rectangular pillar shapes into a bundle using a sealing material and partially cutting the bundle of the honeycomb members to adjust the outer shape of the bundle.
[Patent Document 1] JP-A 2003-260322
[Patent Document 2] JP-B 3121497
[Patent Document 3] JP-A 2005-154202

In the honeycomb structured body having a circular cross-section described in document 3, each honeycomb member forming a peripheral portion of the structure is cut to have an isosceles right triangular cross-section. In this case, depending on the diameter of the honeycomb structured body or the number of the honeycomb members bonded together, some of the honeycomb members forming the peripheral portion may have extremely small cross-sectional areas.

EP 1 375 853 A1 describes a honeycomb structure obtained by bonding, into one piece, a plurality of honeycomb segments each having a large number of passage surrounded by cell walls and extending in the axial direction of the segment. By providing a material having compressive elasticity on the outermost peripheral surface of the honeycomb structure in a compressed state, the honeycomb structure can be compression, held in a metallic container.

EP 1 440 722 A1 describes a honeycomb filter as constituted by integrating a plurality of honeycomb segments including a large number of through channels partitioned by partition walls and extending through an axial direction.

In a conventional honeycomb structured body, heat easily escapes from the peripheral portion toward the casing of the structure. As a result, the temperature at the peripheral portion tends to be lower than the temperature at a central portion of the structure. In particular, when a sealing material is interposed between adjacent honeycomb members of the honeycomb structured body, the sealing material weakens heat conduction and causes the temperature of the peripheral portion to decrease easily. In this way, the temperature of the peripheral portion of the honeycomb structured body may often fail to be high enough to sufficiently burn and remove PM. In this case, unburned PM is likely to reside on the partitions of the honeycomb members forming the peripheral portion of the honeycomb structured body. Among the honeycomb members forming the peripheral portion of the honeycomb structured body, the temperature of honeycomb members having extremely small cross-sectional areas is likely to decrease greatly and cause such unburned residual PM. As a result, cells of the honeycomb members having extremely small cross-sectional areas are likely to be clogged by PM. The PM that has clogged the cells may self-ignite in some situations and may locally generate thermal shock. As a result, the honeycomb structured body (in particular the peripheral portion of the honeycomb structured body) may crack.

It is an object of the present invention to provide a honeycomb structured body and manufacturing method for preventing clogging of cells in a filter peripheral portion.

To achieve the above object, the present invention provides a honeycomb structured body comprising the features of claim 1.

When representing a cross-sectional area of the vertical cross-section of each first honeycomb member with S0 and representing a cross-sectional area of a vertical cross-section of the filling layer orthogonal to the axis with S1, it is preferable that a ratio of the area S1 to the area S0 be less than 4%.

Depending on the shape of the honeycomb structured body, honeycomb members having an extremely small vertical cross-section have a tendency of being formed at equal angular intervals in the circumferential direction. In such a honeycomb structured body, it is preferred that a plurality of filling layers be arranged on the outer surface of the honeycomb structured body at equiangular intervals about the axis. Particularly, it is preferred that the plurality of filling layers be arranged on the outer surface of the honeycomb structured body at a 0-degree position on an extension of the outer wall of one of the first honeycomb members that is adjacent to the center of the honeycomb structured body, and a 90-degree position, a 180-degree position, and a 270-degree position that are respectively separated from the 0-degree position by 90 degrees, 180 degrees, and 270 degrees about the center or be arranged at the 0-degree position and a 45-degree position, a 135-degree position, a 225-degree position, and a 315-degree position that are respectively separated from the 0-degree position by 45 degrees, 135 degrees, 225 degrees, and 315 degrees about the center. The balanced arrangement of the filling layers in the honeycomb structured body is optimal for the removing of PM in the entire aggregation.

It is preferred that the filling layer be arranged to extend between end surfaces of the honeycomb structured body along the axis. Accordingly, there would be no gaps that hinder temperature rising in the filter peripheral portion between the outer coating layer and the filter core portion or the filter peripheral portion. Thus, the heat conductivity of the filter peripheral portion is satisfactory.

It is preferred that the filling layer contain inorganic particles. Inorganic particles cause the filling layer to have satisfactory heat conductivity and improve heat conductivity in the filter peripheral portion.

It is preferred that the filling layer contains either one of inorganic fibers and inorganic hollow bodies. The one of inorganic fibers and the inorganic hollow bodies improves heat resistance and strength of the filling layer. As a result, even when the filling layer thermally expands due to the heat generated when removing the PM captured in the partition, cracking of the filling layer is suppressed.

Further, it is preferred that the inorganic fibers have an average fiber diameter of 1 to 40 µm and an average fiber length of 10 to 200 µm. It is more preferred that the inorganic fibers have an average fiber diameter of 6 to 40 µm. This further increases the heat resistance of the filling layer.

It is preferred that the inorganic fibers have a tap density of 55 to 65 g/cm³. This further increases the strength and adhesion of the filling layer. Thus, even when the filling layer thermally expands due to the heat generated when removing the PM captured in the partition, cracking of the filling layer is suppressed in an optimal manner.

It is preferred that the filling layer has a composition identical to that of the outer coating layer. This easily conducts heat between the filling layer and the outer coating layer and increases heat conduction at the peripheral portion of the honeycomb structured body.

It is preferred that each honeycomb member has a cell density of 200 to 300 cells per square inch. This obtains partition surface area that ensures sufficient capturing of the PM in the exhaust gas and thermal shock resistance. Additionally, pressure loss, which tends to occur as the cells become finer, suppress PM clogging (bridging) in the cells.

It is preferred that the partition has a thickness of 0.33 mm or less. This obtains the heat amount required to easily increase the rising speed of the partition temperature when removing the PM captured in the partition. If the partition has a thickness of 0.1 mm or more, sufficient mechanical strength is ensured for the honeycomb structured body.

The honeycomb structured body has a vertical cross-section orthogonal to the axis that is circular or oval. In one example, a catalyst is carried by the partition. This easily burns and purifies the PM collected in and on the partition.

The honeycomb structured body is manufactured by a method comprising the features of claim 17.

In one example, a cutting step configured to cut the outer surface of the aggregation is performed.

In one example, the aggregation formation step, the filling layer formation step, the cutting step, and the outer coating layer formation step are performed in this order.

In a further example, the filling layer formation step and the outer coating layer formation step are performed after the aggregation formation step and the cutting step are performed.

In another example, when each of the honeycomb members is formed into a predetermined shape in advance. In this case, the filling layer formation step and the outer coating layer formation step are performed after the aggregation formation step is performed.

The filling layer formation step and the outer coating layer formation step may be performed simultaneously.

The method further includes the step configured to form the second honeycomb members by cutting some of the plurality of honeycomb members before the aggregation formation step. The aggregation formation step includes forming the filter core portion and forming the filter peripheral portion around the filter core portion.
Fig. 1 is a schematic view of an exhaust gas purification device including a honeycomb structured body according to a preferred embodiment of the present invention.
Fig. 2A is a vertical cross-sectional view of the honeycomb structured body of the preferred embodiment, Fig. 2B is a partially enlarged view of the honeycomb structured body of Fig. 2A, Fig. 2C is a cross-sectional view of a filter core portion of the honeycomb structured body of Fig. 2A, and Fig. 2D is a cross-sectional view of a filter peripheral portion of the honeycomb structured body of Fig. 2A.
Fig. 3 is a perspective view of a honeycomb member;
Fig. 4 is a cross-sectional view showing an inner structure of the casing shown in Fig. 1.
Fig. 5 is a vertical cross-sectional view of an aggregation of honeycomb members.
Fig. 6 is a diagram describing cutting of the aggregation of the honeycomb members of Fig. 5.
Fig. 7 is a schematic view of a honeycomb structured body according to a first modification.
Fig. 8 is a schematic view of a honeycomb structured body according to a second modification.
Fig. 9 is a schematic view of a honeycomb structured body according to a third modification.
Fig. 10 is a schematic view of a honeycomb structured body according to a fourth modification.
Fig. 11 is a graph showing test conditions used in an exhaust gas purification test.

A honeycomb structured body according to a preferred embodiment of the present invention will now be described. In the preferred embodiment, the honeycomb structured body is adapted to use in a spontaneous ignition type vehicle exhaust gas purification device in which the captured PM is removed with only the heat from exhaust gas.

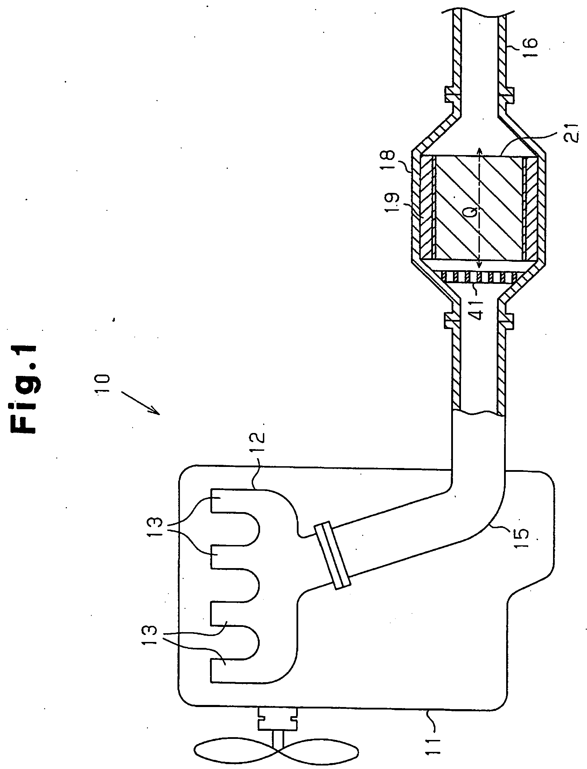

As shown in Fig. 1, an exhaust gas purification device 10 purifies, for example, exhaust gas discharged from a diesel engine 11. The diesel engine 11 includes a plurality of cylinders (not shown). A plurality of branch pipes 13 for an exhaust manifold 12, which is made of a metallic material, are connected to the cylinders.

A first exhaust pipe 15 and a second exhaust pipe 16, which are made of a metallic material, are arranged at positions downstream from the exhaust manifold 12. An upstream end of the first exhaust pipe 15 is connected to the manifold 12. A tubular casing 18, which is made of a metallic material, is arranged between the first exhaust pipe 15 and the second exhaust pipe 16. An upstream end of the casing 18 is connected to a downstream end of the first exhaust pipe 15. A downstream end of the casing 18 is connected to an upstream end of the second exhaust pipe 16. The interior of the first exhaust pipe 15, the casing 18, and the second exhaust pipe 16 communicate with one another. Exhaust gas flows through the interior of the first exhaust pipe 15, the casing 18, and the second exhaust pipe 16.

A middle portion of the casing 18 has a larger diameter than the exhaust pipes 15 and 16. The casing 18 has a larger inner area than that of the exhaust pipes 15 and 16. A honeycomb structured body 21 is accommodated in the casing 18. A heat insulator 19, separate from the honeycomb structured body 21, is arranged between the outer circumferential surface of the honeycomb structured body 21 and the inner circumferential surface of the casing 18. A catalyst carrier 41 is accommodated in the casing 18 at a position upstream from the honeycomb structured body 21. The catalyst carrier 41 internally supports an oxidation catalyst, which is known in the art. Exhaust gas is oxidized in the catalyst carrier 41. Oxidation heat generated during the oxidation is conducted into the honeycomb structured body 21 and used to remove PM in the honeycomb structured body 21.

The honeycomb structured body 21 of the preferred embodiment will now be discussed. In this specification, the term "vertical cross-section" refers to a cross-section orthogonal to an axis Q of the honeycomb structured body 21. The shape of the vertical cross-section is referred to as a "vertical cross-sectional shape" and the area of the vertical cross-section is referred to as a "vertical cross-sectional area".

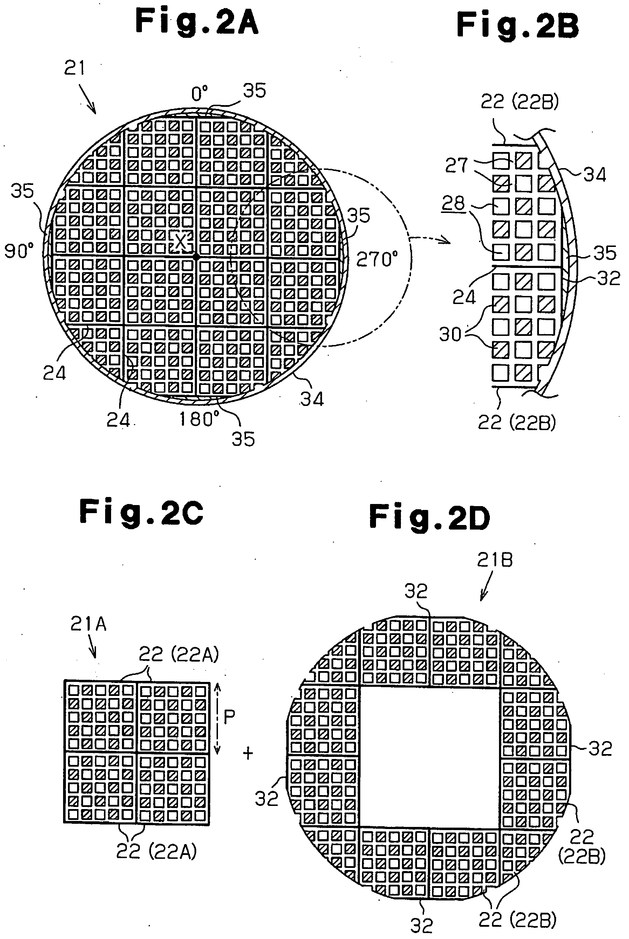

As shown in Fig. 2A, the honeycomb structured body 21 is obtained by bonding a plurality of (sixteen in the preferred embodiment) honeycomb members 22, which have rectangular pillar shapes, into a bundle or an aggregation with a bonding material 24 and cutting the outer surface of the aggregation into a predetermined shape. The bonding material 24 may contain an inorganic binder, an organic binder, and inorganic fibers.

The honeycomb structured body 21 includes a filter core portion 21A having a rectangular cross-section and a filter peripheral portion 21B arranged to surround the filter core portion 21A. The honeycomb structured body 21 is formed to have a circular cross-section (with a diameter of about 143 mm and a vertical cross-sectional area of about 160.6 cm²). The filter core portion 21A, the filter peripheral portion 21B, honeycomb members 22 forming the filter core portion 21A, and honeycomb members 22 forming the filter peripheral portion 21B will now be described.

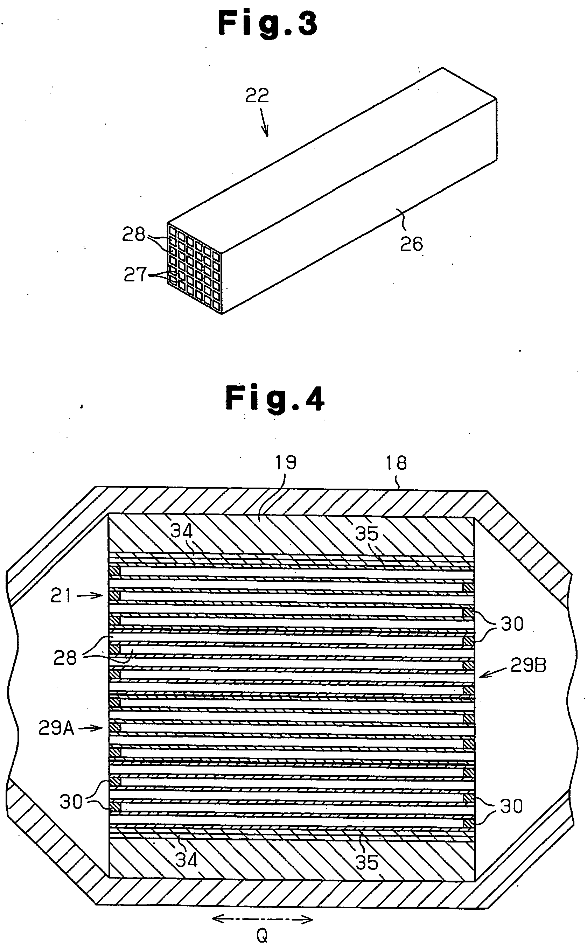

The filter core portion 21A is arranged in a central portion of the honeycomb structured body 21. As shown in Fig. 2C, the filter core portion 21A is formed by four honeycomb members 22 (first honeycomb members 22A). As shown in Fig. 3, each first honeycomb member 22A includes an outer wall 26 and partitions 27 extending inward from the outer wall 26. Each first honeycomb member 22A has a rectangular vertical cross-section. In the preferred embodiment, each first honeycomb structured body 22A has a vertical cross-) sectional area of 11.8 cm².

The outer wall 26 and the partitions 27 of each first honeycomb member 22A are formed mainly from porous ceramic. Examples of the porous ceramic include nitride ceramics such as aluminum nitride, silicon nitride, boron nitride, and titanium nitride, or carbide ceramics such as silicon carbide, zirconium carbide, titanium carbide, tantalum carbide, and tungsten carbide, or oxide ceramics such as alumina, zirconia, cordierite, mullite, silica, and aluminum titanate, and a metallic silicon - silicon carbide composite or the like.

It is preferable that the thickness of the partitions 27 be 0.33 mm or less. The temperature of the partitions 27 having a thickness 0.33 mm or less easily increases when PM captured on and in the partitions 27 is removed. It is preferable that the thickness of the partitions 27 be set 0.1 mm or more to enable the honeycomb structured body 21 to have a sufficiently high mechanical strength.

The partitions 27 in the preferred embodiment may carry a platinum group element (Pt for example), or an oxidation catalyst composed of another metallic element and its oxide. In this case, the catalytic action of the oxidation catalyst accelerates removing of the PM captured on and in the partitions 27.

The honeycomb member 22 (22A) has a plurality of cells 28 that are partitioned by the partitions 27. As shown in Fig. 4, each cell 28 extends from one end surface (upstream end surface) 29A to another end surface (downstream end surface) 29B along the axis Q and functions as a flow passage for the exhaust gas, which serves as a fluid. Each cell 28 has an opening formed at the end surface 29A and an opening formed at the end surface 29B. One opening of each cell 28 is sealed by a plug 30, which is made, for example, of a sintered porous silicon carbide. A plurality of plugs 30 are arranged in a lattice on each of the end surfaces 29A and 29B. More specifically, substantially half of the cells 28 open at the upstream end surface 29A and substantially half of the remaining cells 28 open at the downstream end surface 29B.

The cell density of the honeycomb member 22 is 200 to 300 cells per square inch (cpsi) and preferably 200 to 250 cpsi. In this specification, the "cell density" refers to the number of cells per cross-sectional area. When the cell density of the honeycomb member 22 is 200 cpsi or more, the surface area of the partitions 27 is large enough to sufficiently capture the PM contained in the exhaust gas. When the cell density is 300 cpsi or less, the surface area of the partitions 27 and the thermal shock resistance of the honeycomb members 22 are large enough to sufficiently capture PM contained in the exhaust gas. Further, the clogging (bridging) by PM in the cells is less likely to occur in this case. Moreover, the cells are not excessively small. This avoids an increase in pressure loss, a decrease in the output of the internal combustion engine, and deterioration of fuel efficiency.

As shown in Fig. 2D, the filter peripheral portion 21B is formed by twelve honeycomb members 22 (second honeycomb members 22B). The outer surface of the filter peripheral portion 21B has flat portions 32 that are arranged at 90-degree intervals. Each flat portion 32 extends along the axis Q on the outer surface of the filter peripheral portion 21B. The flat portions 32 are formed when the honeycomb structured body 21 having a diameter of about 143 mm is manufactured by combining 16 second honeycomb members 22B together.

Each second honeycomb member 22B has a vertical cross-section with an irregular shape. In this specification, the term "irregular shape" refers to, for example, a cross-sectional shape of a honeycomb member obtained by performing predetermined cutting on a honeycomb member having a rectangular pillar shape. In particular, the "irregular shape" does not refer to a shape formed by either one of only straight lines and curved lines, such as a circle, an oval, a triangle, or a polygon. "Irregular shape" refers to a shape having both straight lines and curved lines. Examples of irregular shape cross-sections include a cross-section defined by two straight lines and an arc, a cross-section defined by three straight lines and an arc, and a cross-section defined by four straight lines and an arc. The "straight lines" and the "curved lines" will now be described. When the aggregation of the honeycomb members is cut, some of the partitions and some of the sealing material included in the aggregation are removed. As a result, the outer surface of the aggregation has projections and recessions. A hypothetical line connecting the projections exposed from the outer surface of the aggregation is referred to as a "straight line" or a "curved line" in this specification. The aggregation of the honeycomb members 22B that are formed by extrusion has partitions on its side surface (circumferential surface). In this case, the partition portion of the circumferential surface of the aggregation is referred to as the "straight line" or the "curved line" in this specification. The structure of each honeycomb member 22B is the same as the structure of the first honeycomb member 22A except its vertical cross-sectional shape (i.e., in material, thickness of the partitions 27, and cell density). The plurality of second honeycomb members 22B forming the filter peripheral portion 21B may have identical or different vertical cross-sections. At least one of the plurality of second honeycomb members 22B forming the filter peripheral portion 21B may have a structure identical to that of the first honeycomb member 22A forming the filter core portion 21A, that is, a rectangular vertical cross-section. Accordingly, the filter peripheral portion 21B may be formed by honeycomb members having a vertical cross-section with an irregular shape and honeycomb members with a rectangular vertical cross section. It is preferred that most of the honeycomb members forming the filter peripheral portion 21B have an irregular shape.

When the vertical cross-sectional area of each first honeycomb member 22A is represented by S0 and the vertical cross-sectional area of a selected second honeycomb member 22B forming the filter peripheral portion 21B is represented by S2, the ratio of the cross-sectional area S2 to the cross-sectional area S0 is 4% or more. When this ratio is 4% or more, that is, when none of the second honeycomb members 22 forming the filter peripheral portion 21B have an extremely small vertical cross-sectional area, PM is sufficiently removed in all the honeycomb members 22. In this case, the cells 28 of all the honeycomb members 22 are prevented from being clogged by unburned residual PM. When this ratio is less than 4%, that is, when at least one of the second honeycomb members 22B forming the filter peripheral portion 21B has an extremely small vertical cross-sectional area, it is difficult to sufficiently remove the PM captured on the honeycomb member 22B having an extremely small vertical cross-sectional area. In this case, the cells 28 of the honeycomb member 22B having an extremely small vertical cross-section is likely to be clogged by unburned residual PM.

A plurality of filling layers 35 are arranged on the outer surface of the filter peripheral portion 21B. More specifically, the filling layers 35 are arranged to fill gaps between the flat portions 32 of the filter peripheral portion 21B and an outer coating layer 34. In the example of Fig. 2A, the filling layers 35 are arranged on the outer surface of the honeycomb structured body 21 at equiangular intervals about a center X of the honeycomb structured body 21 (e.g., 0-degree, 90-degree, 180-degree, and 270-degree positions). On the outer surface of the honeycomb structured body 21, the 0-degree position is on an extension of the outer wall 26 of a first honeycomb member 22A that is adjacent to the center X and extends parallel to direction P (refer to Fig. 2C). On the outer surface of the honeycomb structured body 21, the 90-degree, 180-degree, and 270-degree positions are respectively separated from the 0-degree position by 90 degrees, 180 degrees, and 270 degrees. The outer coating layer 34 is applied with substantially uniform thickness to the outer surface of the filter peripheral portion 21B. The filling layers 35 are arranged between the outer surface of the filter peripheral portion 21B and the outer coating layer 34.

The filter peripheral portion 21B shown in Fig. 2B has been subjected to cutting. In this case, the outer surface of the filter peripheral portion 21B partially has projections and recessions. The outer coating layer 34 is applied to cover the projections and the recessions. As a result, the recessions formed on the outer surface of the filter peripheral portion 21B are filled by the material forming the outer coating layer 34. When the filter peripheral portion 21B uses the second honeycomb members 22B having irregular shapes that are formed by extrusion, the entire outer surface of the filter peripheral portion 21B is formed by a side wall having no recessions and projections. In this case, the outer coating layer 34 is applied to cover the side wall.

When the vertical cross-sectional area of the filling layer 35 is S1 and the vertical cross-sectional area of each first honeycomb member 22A forming the filter core portion 21A is S0, the ratio of the area S1 to the area S0 is less than 4%. When this ratio is 4% or more, the temperature of the filling layer 35 may occur surface irregularity and the internal heat stress of the filling layer 35 may excessively increase when heating is performed with the exhaust gas. In this case, the filling layers 35 may crack or peel off. Thus, when this ratio for at least one of the filling layers 35 is 4% or more, it is preferable that the at least one of the filling layers 35 be replaced by a second honeycomb member 22B. This is because the amount of heat is large enough to sufficiently remove PM when the vertical cross-sectional area S2 of the second honeycomb member 22B to the vertical cross-sectional area S0 of the first honeycomb member 22A forming the filter core portion 21A is 4% or more as described above. The filling layers 35 are arranged in parts of the outer surface of the honeycomb structured body 21 in a manner that the filling layers 35 extend between the end surfaces 29A and 29B along the axis Q (refer to Fig. 4).

The filling layers 35 contain inorganic particles and inorganic fibers. The inorganic particles function to give the filling layers 35 satisfactory heat conductivity. Examples of the inorganic particles include a ceramics selected from the group consisting of silicon carbide, silicon nitride, cordierite, alumina (e.g., molten alumina or sintered alumina), mullite, zirconia, zirconium phosphate, aluminum titanate, titania, silica (e.g., molten silica), and mixture thereof; an iron-chrome-aluminum metal; a nickel metal; and a metallic silicon-silicon carbide composite or the like. These different kinds of inorganic particles may be used solely. Alternatively, two or more of these kinds may be used in combination.

The inorganic fibers function to improve the heat resistance and the strength of the filling layers 35. Examples of the inorganic fibers include silica-alumina ceramic fibers, mullite fibers, silica fibers, alumina fibers, and zirconia fibers. These different kinds of inorganic fibers may be used solely. Alternatively, two or more of these kinds may be used in combination. In the preferred embodiment, the inorganic fibers having specific properties are used to improve the heat resistance and the strength of the filling layers 35. The properties of the inorganic fibers used in the preferred embodiment will now be described.

The average fiber diameter of the inorganic fibers in the preferred embodiment is preferably 1 to 40 µm and more preferably 6 to 40 µm. The average fiber length of the inorganic fibers is preferably 10 to 200 µm and more preferably 20 to 30 µm. In this specification, the "average fiber diameter" refers to an average value of the fiber diameter values of a plurality of fibers that are randomly selected from a micrograph showing the cross-section of the filling layer 35, which is obtained using a scanning electron microscope. The "average fiber length" refers to an average value of the fiber length values of randomly selected fibers.

When the inorganic fibers have an average fiber diameter of less than 1 µm and an average fiber length of less than 10 µm, it is difficult to ensure a sufficiently high heat resistance and a sufficiently high strength for the filling layers 35. In this case, the heating using the exhaust gas may cause the filling layers 35 to crack or to peel off easily. Further, even when the inorganic fibers have an average fiber diameter exceeding 40 µm and an average fiber length exceeding 200 µm, the inorganic fibers do not improve the heat resistance and the strength of the filling layers 35 any further, and such inorganic fibers are not economical. The inorganic fibers having an average fiber diameter of 6 to 40 µm have less impact on the human body.

The tap density of the inorganic fibers is preferably 55 to 65 g/cm³ and more preferably 55 to 60 g/cm³. In this specification, the "tap density" refers to the volume density of the inorganic fibers that is obtained by tapping the container under certain conditions. A tap density having a greater value indicates that the inorganic fibers are filled more densely. When the tap density of the inorganic fibers is less than 55 g/cm³, it is difficult to ensure sufficiently high heat resistance and sufficiently high strength for the filling layers 35. When the tap density of the inorganic fibers exceeds 65 g/cm³, the orientation of the fibers may be so high that the bonding strength of the filling layers 35 to the honeycomb members 22 may become low.

Instead of the inorganic fibers or in addition to the inorganic fibers, the filling layers 35 may contain inorganic hollow bodies (inorganic balloons). Examples of the inorganic hollow bodies include glass micro balloons, alumina balloons, and ceramic balloons. The average particle diameter of the inorganic hollow bodies is not limited to particular values.

The filling layers 35 may further contain an inorganic binder, an organic binder, etc. Examples of the inorganic binder include an alumina sol, a silica sol, and a titania sol. These binders may be used solely. Alternatively, two or more of these binders may be used in combination. Examples of the organic binder include hydrophilic organic polymers, such as carboxymethyl cellulose, polyvinyl alcohol, methyl cellulose, and ethyl cellulose. These organic binders may be used solely. Alternatively, two or more of these binders may be used in combination.

The outer coating layer 34 functions to prevent displacement of the honeycomb structured body 21 within the casing 18. The composition of the outer coating layer 34 may be the same as the composition of the filling layers 35. The outer coating layer 34 is arranged to cover the entire outer surface of the filter peripheral portion 21B.

The outer coating layer 34 may be formed after the filling layers 35 are formed. The filling layers 35 and the outer coating layer 34 may be formed simultaneously.

The manufacturing method for the honeycomb structured body will now be described.

First, a plurality of honeycomb members 22 are prepared. Each honeycomb member 22 has an outer wall 26 and partitions 27 for partitioning a plurality of cells 28 that function as a flow passage for a fluid. The honeycomb members 22 are bonded into an aggregation S using a bonding material 24 (assembly formation process). The outer surface of the aggregation S may be cut as necessary to adjust the shape of the aggregation S (cutting process). When honeycomb members 22 having predetermined irregular shapes, such as honeycomb members 22 that are manufactured by extrusion, are used, the cutting process of the aggregation S does not have to be performed. Filling layers 35 are arranged at predetermined positions on the outer surface of the aggregation S (filling layer formation process). An outer coating layer 34 is applied on the outer surface of the aggregation S (outer coating layer formation process). This completes the manufacturing of the honeycomb structured body of the present invention.

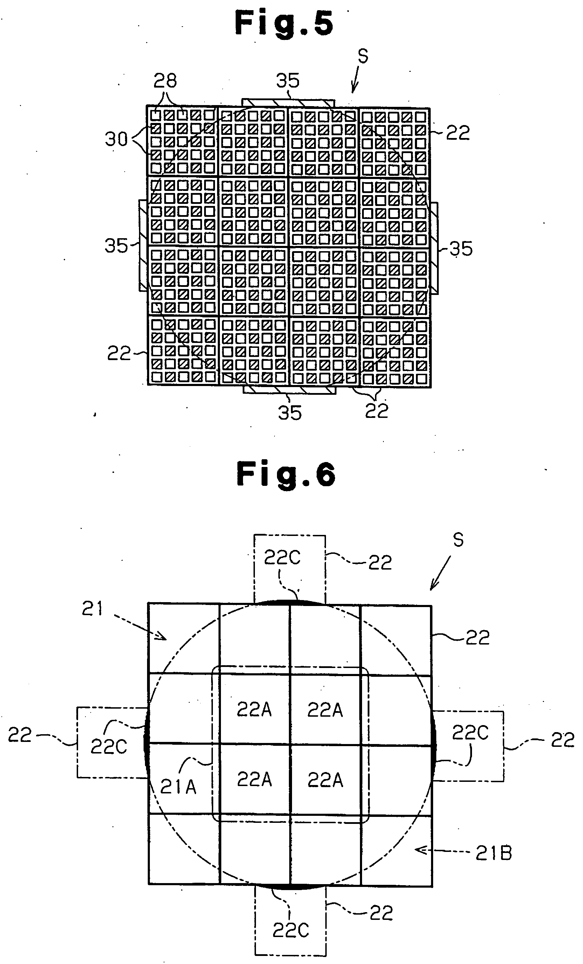

A first manufacturing example in which the aggregation formation process, the filling layer formation process, the cutting process, and the outer coating layer formation process are performed in this order will now be described. First, intermediate extruded bodies are formed through extrusion using, for example, a plunger type extrusion machine or a biaxial screw continuous extrusion machine. The intermediate extruded bodies are then fired to obtain honeycomb members 22. Sixteen honeycomb members 22 are bonded into an aggregation S with a bonding material 24 (refer to Fig. 5). Filling layers 35 are arranged at predetermined positions of the outer surface of the aggregation S (at middle positions of the side surfaces of the aggregation S). Next, the outer surface of the aggregation S is cut using a diamond tool etc. so that the cross-sectional shape of the aggregation S becomes circular. An outer coating layer 34 is applied to the entire outer surface of the aggregation S. This completes the manufacturing of the honeycomb structured body 21 shown in Fig. 2A.

When the honeycomb structured body 21 having a circular vertical cross-section is manufactured in the cutting process, the honeycomb members 22B forming the filter peripheral portion 21B are formed to have irregular shapes. In such a case, depending on the number of the honeycomb members 22 to be bonded or the diameter of the honeycomb structured body 21, predetermined honeycomb members (22C) forming the filter peripheral portion 21B may have vertical cross-sectional areas that are much smaller than the vertical cross-sectional area S0 of the honeycomb member 22A forming the filter core portion 21A (refer to Fig. 6). For example, a honeycomb structured body 21 having the same diameter as the honeycomb structured body of the preferred embodiment (143 mm) may be formed by additionally arranging one honeycomb member 22 at the middle position of each side surface of the aggregation S of the honeycomb members 22 as shown in Fig. 6. In this case, each honeycomb member 22 arranged on the side surface of the aggregation S is a honeycomb member 22C having a vertical cross-sectional area ratio less than 4% to the vertical cross-sectional area S0 of the honeycomb member 22A forming the filter core portion 21A. In such honeycomb members 22C having extremely small cross-sectional areas, the PM captured by the partitions 27 may not be sufficiently burned. When such a honeycomb structured body 21 is continuously used in this state, PM accumulates over time in the honeycomb members 22C having the extremely small vertical cross-sectional areas. As a result, the cells 28 of the honeycomb members 22C are clogged by the PM. This not only lowers the exhaust gas purification efficiently but may also cause the honeycomb structured body 21 (in particular the peripheral portion of the honeycomb structured body 21) to crack when the honeycomb structured body 21 is subjected to heat shock generated by self-ignition of the PM.

To prevent this, the honeycomb members 22C having extremely small vertical cross-sectional areas in which the cells 28 are likely to be clogged are not formed. Instead, the filling layers 35 are formed at the positions of such honeycomb members 22C (refer to Fig. 2B). In this way, the honeycomb structured body 21 does not include the members in which the cells 28 are likely to be excessively clogged (honeycomb members 22C having extremely small vertical cross-sectional areas). The peripheral portion of the honeycomb structured body 21 of the preferred embodiment is formed only by second honeycomb members 22B having sufficiently large vertical cross-sectional areas. More specifically, the peripheral portion is formed only by the second honeycomb members 22B having a vertical cross-sectional area ratio 4% or more to the vertical cross-sectional area S0 of the first honeycomb member 22A. As a result, each honeycomb member 22B forming the filter peripheral portion 21B retains an amount of heat large enough to sufficiently remove PM during heating using the exhaust gas. The honeycomb structured body 21 of the preferred embodiment prevents the cells 28 of the filter peripheral portion 21B from being clogged, and consequently prevents the peripheral portion of the honeycomb structured body 21 from cracking.

The filling layers 35 are filled at the positions of the honeycomb members having extremely small vertical cross-sectional areas. The filling layers 35 prevent gaps from being formed between the filter peripheral portion 21B and the outer coating layer 34, and prevent the exhaust gas from entering between the filter peripheral portion 21B and the outer coating layer 34. Further, the filling layers 35 containing the inorganic particles have satisfactory heat conductivity. Thus, the filling layers 35 also contribute to improving the heat conductivity of the filter peripheral portion 21B.

When the filling layer 35 has an extremely large vertical cross-sectional area S1, the temperature of the filling layer 35 may occur surface irregularity and the internal heat stress of the filling layer 35 may increase excessively when heating is performed with the exhaust gas. In this case, the filling layer 35 may crack or peel off. As a result, the exhaust gas may enter between the filter peripheral portion 21B and the outer coating layer 34. However, the ratio of the vertical cross-sectional area S1 of the filling layer 35 to the vertical cross-sectional area S0 of the first honeycomb member 22A is less than 4% in the preferred embodiment. Thus, the temperature of the filling layer 35 does not vary greatly and the internal heat stress of the filling layer 35 does not increase excessively when heating is performed with the exhaust gas. Thus, the filling layer 35 is prevented from cracking or peeling off to form a gap between the filter peripheral portion 21B and the outer coating layer 34. This prevents non-purified exhaust gas from being discharged.

A second manufacturing example in which the aggregation formation process and the cutting process are first performed and the filling layer formation process and the outer coating layer formation process are then performed will now be described.

The aggregation formation process and the cutting process are the same as in the first manufacturing example. Filling layers 35 are formed on the filter peripheral portion 21B. Afterwards, an outer coating layer 34 is formed to cover the filling layers 35 and the filter peripheral portion 21B. When the filling layers 35 are formed, the filling layers 35 are selectively filled in parts of the filter peripheral portion 21B that are recessed from a hypothetical contour line (e.g., a circle) of the filter peripheral portion 21B. At this point, it is preferable that the filling layers 35 be formed to project from the hypothetical outer circumference. This is because the filling layers 35 projecting from the hypothetical outer circumference reduce projections and recessions on the outer surface of the honeycomb structured body 21 after the outer coating layer 34 is formed. The projections and the recessions on the outer surface of the honeycomb structured body 21 not only cause leakage of the exhaust gas but also makes it difficult to hold the sealing material (heat insulator 19) with the honeycomb structured body 21.

Third and fourth manufacturing examples in which the filling layer formation process and the outer coating layer formation process are performed simultaneously after the aggregation formation process and the cutting process are performed will now be described.

The aggregation formation process and the cutting process are the same as in the first manufacturing example. In the third manufacturing example, paste materials for forming the filling layers 35 and the outer coating layer 34 are applied to the filter peripheral portion 21B with a spatula. This enables the filling layers 35 and the outer coating layer 34 to be formed simultaneously. In the fourth manufacturing example, the filter peripheral portion 21B is accommodated in a tubular jig. The paste materials for forming the filling layers 35 and the outer coating layer 34 are injected into a gap formed between the jig and the filter peripheral portion 21B. After the paste materials are dried, the jig is taken off. This obtains the honeycomb structured body 21. It is preferable that the jig be formed by a plurality of components that are separable from one another. This is to facilitate the taking out the honeycomb structured body 21 from such a jig. The fourth manufacturing example is more advantageous than the third manufacturing example because the fourth manufacturing example includes less and easier processes.

Fifth and sixth manufacturing examples in which the filling layer formation process and the outer coating layer formation process are performed after the aggregation formation process is performed will now be described.

In the fifth manufacturing example, the second honeycomb members 22B having desired irregular shape cross-sections are prepared by extruding such second honeycomb members 22B. In the sixth manufacturing example, the honeycomb members 22 having rectangular pillar shapes are cut to prepare the second honeycomb members 22B having desired irregular shape cross-sections. A plurality of first honeycomb members 22A and a plurality of second honeycomb members 22B are bonded into an aggregation S with a bonding material 24. The filling layer formation process and the outer coating layer formation process are the same as in the third and fourth manufacturing examples. The fifth manufacturing example is more advantageous than the sixth manufacturing example because the fifth manufacturing example includes less and easier processes. The second to sixth manufacturing examples also have the same advantages as the first manufacturing example.

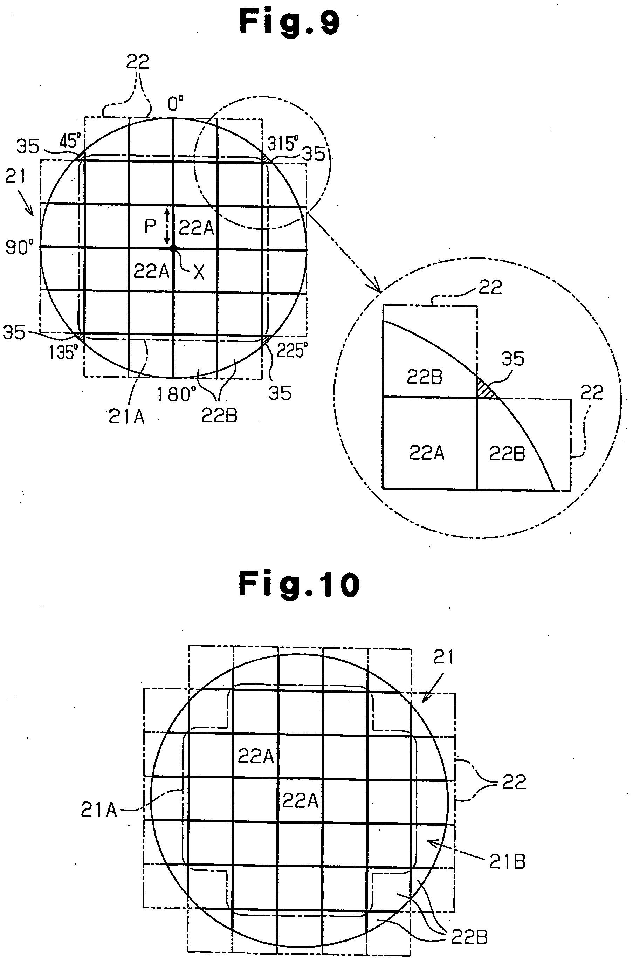

Further, a honeycomb structured body having a circular vertical cross-section may be manufactured by simply bonding together a plurality of honeycomb members without forming filling layers. With this method, some of the honeycomb members may have relatively fragile acute-angle portions. Such acute-angle portions are easily chipped. In such a case, some honeycomb members may have an outer shape formed by acute-angle portions that are chipped and rounded when the honeycomb members are extruded. In this case, the honeycomb members having desired shapes may not be correctly manufactured. This method that does not form the filling layers is disadvantageous in that the yield of the honeycomb structured body 21 may decrease. The first to sixth manufacturing examples do not cause the honeycomb members 22 to have acute-angle portions. The first to sixth manufacturing examples enable the honeycomb members having desired shapes to be correctly manufactured. Further, the above method that does not form the filling layers cannot be used to manufacture the honeycomb structured body 21 of Fig. 9 although the method can be used to manufacture the honeycomb structured bodies 21 of Figs. 6 to 8 and Fig. 10. Thus, the method that does not form the filling layers is disadvantageous in its narrow range of the honeycomb structured bodies 21 that can be manufactured.

Subsequent to the formation of the filter core portion 21A, the filter peripheral portion 21B may be formed outside the filter core portion 21A. The filter core portion 21A and the filter peripheral portion 21B may first be formed separated and then be integrated with each other. The filter core portion 21A and the filter peripheral portion 21B may also be simultaneously formed.

The preferred embodiment has the advantages described below.
(1) The honeycomb members that would retain a small amount of heat therein, that is, the honeycomb members having extremely small vertical cross-sectional areas, are not used to remove PM and are not formed in the preferred embodiment. The filling layers 35 are formed so as to take the positions of such honeycomb members. This honeycomb structured body does not include honeycomb members in which their cells 28 are likely to be clogged excessively. This prevents the cells 28 of the filter peripheral portion 21B from being clogged and prevents the peripheral portion of the honeycomb structured body 21 from cracking in an optimal manner.
(2) When the vertical cross-sectional area of each filling layer 35 is S1 and the vertical cross-sectional area of each first honeycomb member 22A forming the filter core portion 21A is S0, the ratio of the area S1 to the area S0 is less than 4%. The filling layers 35 formed instead of the honeycomb members having a vertical cross-sectional area ratio of less than 4% to the vertical cross-sectional area S0 of the honeycomb member 22 forming the filter core portion 21A prevents the cells 28 of the filter peripheral portion 21B from being clogged. Further, with the ratio of the vertical cross-sectional area S1 of the filling layer 35 being less than 4%, the temperature of the filling layer 35 does not occur surface irregularity greatly and the internal heat stress of the filling layer 35 does not increase excessively when heating is performed with the exhaust gas. As a result, the filling layer 35 is prevented from cracking or peeling off.
(3) The filter peripheral portion 21B is formed only by the honeycomb members 22B each having a vertical cross-sectional area ratio 4% or more to the vertical cross sectional area S0 of the honeycomb member 22A forming the filter core portion 21A. This enables all the honeycomb members 22 forming the filter peripheral portion 21B to retain an amount of heat large enough to sufficiently remove PM captured on their partitions 27. As a result, the cells 28 of the peripheral portion of the honeycomb structured body 21 of the preferred embodiment are prevented from being clogged by PM in an optimal manner.
(4) The filling layers 35 are arranged to extend between the end surfaces 29A and 29B of the honeycomb structured body 21 along the axis Q. This prevents gaps from being formed between the filter peripheral portion 21 and the outer coating layer 34. As a result, the filter peripheral portion 21B conducts heat in an optimal manner.
(5) The filling layers 35 containing the inorganic particles have sufficiently high heat conductivity. As a result, the filter peripheral portion 21B conducts heat in a optimal manner.
(6) The filling layers 35 contain the inorganic fibers having an average fiber diameter of 1 to 40 µm and an average fiber length of 10 to 200 µm to increase the heat resistance and strength of the filling layers 35. This prevents the filling layers 35 from cracking or peeling off.
(7) The tap density of the inorganic fibers is 55 to 65 g/cm³. This further increases the strength and the bonding force of the filling layers 35. Thus, the filling layers 35 are easily prevented from cracking or peeling off.
(8) The filling layers 35 have the same composition as the outer coating layer 34. Thus, heat is easily conducted between the filling layers 35 and the outer coating layer 34. This increases the heat conductivity of the peripheral portion of the honeycomb structured body 21 in an optimal manner.
(9) It is preferable that the partitions 27 of the honeycomb members 22 carry an oxidation catalyst. The oxidation catalyst accelerates removing of the PM captured on and in the partitions 27. In this case, the PM is easily burned and purified.
(10) The cell density of each honeycomb member 22 is 200 to 300 cpsi. This enables the partitions 27 to have a surface area large enough to sufficiently capture PM contained in the exhaust gas. This further enables the pressure loss to decrease, and minimizes the clogging (bridging) by PM in the cells.
(11) The thickness of the partitions 27 is 0.33 mm or less. Thus, the temperature of the partitions increases rapidly when the PM captured on and in the partitions 27 is removed. As a result, the PM is easily removed. When the thickness of the partitions is 0.1 mm or more, the mechanical strength of the honeycomb structured body 21 is sufficiently high.

The preferred embodiment may be modified in the following forms.

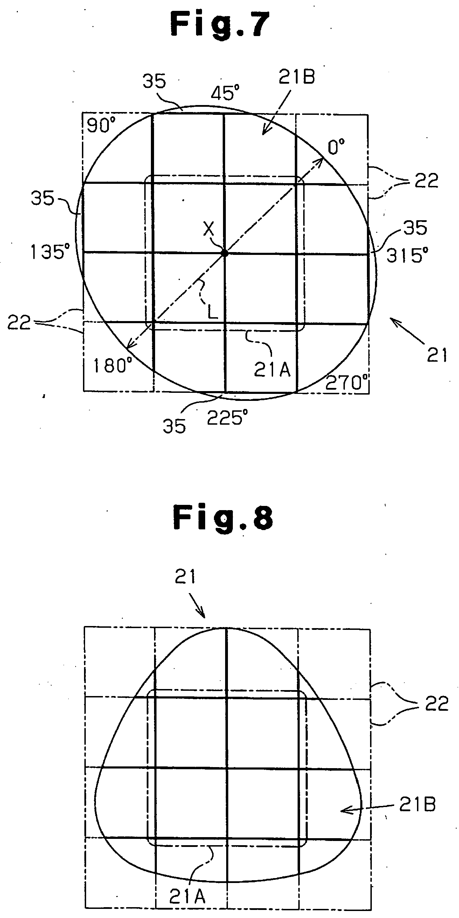

The honeycomb structured body 21 may have an oval cross-section as in a first modification shown in Fig. 7. In this case, the filling layers 35 are arranged on the outer surface of the honeycomb structured body 21 at equiangular interval positions (45-degree, 135-degree, 225-degree, and 315-degree positions) about the center X. In this example, the 0-degree position on the outer surface of the honeycomb structured body 21 is on an extension of a minor axis L extending through the center X.

The honeycomb structured body 21 may have a generally triangular vertical cross-section as in a second modification shown in Fig. 8.

Although the filling layers 35 and the outer coating layer 34 have the same composition in the preferred embodiment, the layers may have different compositions. For example, the outer coating layer 34 may not contain the inorganic hollow bodies and only the filling layers 35 may contain the inorganic hollow bodies.

The filling layers 35 extend between the end surfaces 29A and 29B of the honeycomb structured body 21 in the preferred embodiment. However, it is only required that the filling layers 35 be arranged at least in the vicinity of the upstream end surface 29A of the honeycomb structured body 21.

The filling layers 35 are arranged on the outer surface of the filter peripheral portion 21B at the 0-degree, 90-degree, 180-degree, and 270-degree positions in the preferred embodiment. However, the positions at which the filling layers 35 are formed should not be limited to these positions. The positions at which the filling layers 35 are formed may be changed as necessary according to the diameter of the honeycomb structured body 21 or the number of the honeycomb members 22 that are bonded together. For example, the honeycomb structured body 21 may have a diameter of about 203 mm and may be formed by bonding thirty-two honeycomb members 22 as in a third modification shown in Fig. 9. In this case, the filling layers 35 may be arranged on the outer surface of the honeycomb structured body 21 at 45-degree, 135-degree, 225-degree, and 315-degree positions about the center X. In this example, the 0-degree position on the outer surface of the honeycomb structured body 21 is on an extension of the outer wall 26, which extends parallel to the direction P, of a first honeycomb member 22A that is adjacent to the center X.

The filling layers 35 may be unnecessary depending on the diameter of the honeycomb structured body 21 or the number of bonded honeycomb members 22. For example, the honeycomb structured body 21 may have a diameter of about 228 mm and may be formed by bonding forty-five honeycomb members 22 of the preferred embodiment as in a fourth modification shown in Fig. 10. In this case, the ratio of the vertical cross-sectional area S2 of each of all the honeycomb members 22B forming the filter peripheral portion 21B to the vertical cross-sectional area S0 of the honeycomb member 22A forming the filter core portion 21A is 4% or more.

The second honeycomb members 22B may be formed from a material having a lower heat conductivity than the porous ceramic forming the first honeycomb members 22A. In this case, the heat insulation effect of the filter peripheral portion 21B increases. Heat is less likely to escape toward the casing 18. As a result, the temperature of the filter peripheral portion 21B is prevented from decreasing. In this case, the PM removing efficiency of the honeycomb structured body increases.

The honeycomb structured body of the preferred embodiment may be adapted to use in an exhaust gas purification device other than the spontaneous ignition type exhaust gas purification device. For example, the honeycomb structured body may be adapted to use in an exhaust gas purification device for removing PM with a heating means such as a heater or a burner. Further, the honeycomb structured body may be adapted to use in an exhaust gas purification device for a combustion apparatus other than an internal combustion engine. For example, the honeycomb structured body may be adapted to use in an exhaust gas purification for a boiler.

A honeycomb structured body having the structure described below is included in the scope of the present invention.
(1) A honeycomb structured body includes a plurality of honeycomb members, which are bonded together with a bonding material, and an outer surface formed by an outer coating layer. Each honeycomb member includes an outer wall, a partition arranged inward from the outer wall, and a plurality of cells partitioned by the partition and functioning as a flow passage for a fluid. The honeycomb structured body includes a filter core portion, which is formed by integrating a plurality of first honeycomb members in the plurality of honeycomb members that have a rectangular cross-section orthogonal to an axis of the honeycomb structured body, and a filter peripheral portion, which is arranged outside the filter core portion and formed by a plurality of second honeycomb members in the plurality of honeycomb members that have a cross-section shaped differently from a rectangular and is orthogonal to the axis. When an area of the cross-section of each first honeycomb member is represented by S0 and an area of the cross-section of each filling layer orthogonal to the axis is represented by S1, a ratio of the cross-sectional area S1 to the cross-sectional area S0 is less than 4%. This structure enables each honeycomb member forming the filter peripheral portion to retain an amount of heat large enough to sufficiently remove PM captured on the partition and prevents the cells from being clogged by PM in an optimal manner.
(2) In the honeycomb structured body, the ratio of the cross-sectional area S1 to the cross-sectional area S0 is less than 9%.
(3) The cross-section orthogonal to the axis is oval.
The honeycomb structured body has, on the outer surface thereof, a 0-degree position that is on an extension of a minor axis drawn on a center of the honeycomb structured body, and a 45-degree position, a 135-degree position, a 225-degree position, and a 315-degree position that are respectively separated from the 0-degree position by 45 degrees, 135 degrees, 225 degrees, and 315 degrees. A plurality of filling layers are arranged at the 45-degree position, the 135-degree position, the 225-degree position, and the 315-degree position. This structure ensures that the honeycomb structured body having an oval cross-section sufficiently removes PM in its filter peripheral portion.

Test examples of the present invention and comparative examples will now be described.

### <Manufacturing of the Honeycomb Structure>

### (Test Example 1)

In test example 1, the honeycomb structured body 21 shown in Figs. 2 and 6 was manufactured. First, 7000 part by weight of alpha silicon carbide particles having an average particle diameter of 10 µm and 3000 parts by weight of alpha silicon carbide particles having an average particle diameter of 0.5 µm were wet mixed. Then, 570 parts by weight of an organic binder (methyl cellulose) and 1770 parts by weight of water were added to 10000 parts by weight of the resulting mixture, which was kneaded to form a mixed composition. Then, 330 parts by weight of a reversible agent (UNILUB (registered trademark) manufactured by NOF CORPORATION) and 150 parts by weight of a lubricant agent (glycerin) were added to the mixed composition, which was kneaded and subjected to extraction to form an extruded body having a rectangular pillar shape shown in Fig. 3.

Next, the extruded body was dried using for example a microwave drier to obtain a ceramic dried body. A plug paste having the same composition as the extruded body was filled in the openings of predetermined cells. After the paste was dried using a drier, the ceramic dried body was degreased at 400°C and was fired for three hours in an argon atmosphere at 2200°C under normal pressure to obtain a honeycomb member 22 (Fig. 3) formed by a silicon carbide sintered body. This honeycomb member 22 has the dimensions of 34.3 × 34.3 × 150 mm (height × width × length), a porosity of 42%, an average porous diameter of 11 µm, a cell density of 240 cells per square inch (cpsi), and a cell partition thickness of 0.3 mm.

A bonding material paste having heat resistance was prepared separately. The bonding material paste is composed of 30 parts by weight of alumina fibers having an average fiber length of 20 µm and an average fiber diameter of 2 µm, 21 parts by weight of carbonaceous elementary particles having an average particle diameter of 0.6 µm, 15 parts by weight of silica sol, 5.6 parts by weight of carboxymethyl cellulose, and 28.4 parts by weight of water. The bonding paste has a viscosity of 30 Pa·s (at room temperature).

Spacers (space maintaining members) were prepared separately. Each spacer is a disk-shaped cardboard with a diameter of 5 mm and a thickness of 1 mm and has two surfaces on which a bonding material is applied.

Spacers were fixed to each honeycomb member 22 in a manner that one spacer was arranged on each corner of each of the side surfaces of the honeycomb member 22. Each spacer was fixed to the corresponding corner of the honeycomb member 22 at a position distant by 6.5 mm from each of the two sides that define the corner. Then, sixteen (4 by 4) honeycomb members 22 with the spacers were bonded into an aggregation S.

Next, the aggregation S was arranged in a paste supply chamber connected to a bonding paste supply apparatus. The paste supply chamber has the inner dimensions of 145 × 145 × 150 mm (height × width × length). The bonding material paste supply apparatus has three supply grooves formed at positions corresponding to the gaps between the honeycomb members 22 included in the aggregation S. Each supply groove has a width of 5 mm. Each supply groove communicates the inner surface of the paste supply chamber with the inner space of the bonding material paste supply apparatus. The paste supply chamber has a bottom plate, which opens and closes, at its end opposite to the end connected to the bonding material paste supply apparatus. This bottom plate was closed to come in contact with the end surface (29A or 29B) of the aggregation S to seal the gaps formed between the honeycomb members 22.

In this state, the bonding material paste was supplied into the paste supply chamber connected to the bonding material paste supply apparatus. The boding member paste was injected from the inner surface of the paste supply chamber to the side surface of the aggregation S under a pressure of 0.2 MPa, and was injected to the end surface of the aggregation S opposite to the end in contact with the bottom plate with a pressure of 0.05 MPa. In this way, the bonding material paste was filled in the gaps between the honeycomb members 22. The aggregation S was then dried for one hour at 100°C to harden the bonding material paste. When the bonding material paste was hardened, the aggregation S was integrated together using the bonding material 24 having a thickness of 1 mm.

Next, 22.3 parts by weight of ceramic fibers formed by alumina silicate serving as inorganic fibers (shot content of 3%, average fiber length of 20 µm, and average fiber diameter of 6 µm), 30.2 parts by weight of silicon carbide particles having an average particle diameter of 0.3 µm as inorganic particles, 7 parts by weight of silica sol serving as an inorganic binder (with an SiO₂ content of 30 parts by weight in the sol), 0.5 parts by weight of carboxymethyl cellulose serving as an organic binder, and 39 parts by weight of water were mixed and kneaded to prepare a filling layer formation paste.

The filling layer formation paste was applied at four positions on the outer surface of the aggregation S. The aggregation S was then dried for one hour at 120°C to harden the filling layer formation paste. As a result, the filling layers 35 were formed (refer to Fig. 5).

Next, the aggregation S was cut with a diamond cutter to form a cylindrical-shape honeycomb block having a diameter of 142 mm.

Next, 22.3 parts by weight of ceramic fibers formed by alumina silicate serving as inorganic fibers (shot content of 3%, average fiber length of 20 µm, and average fiber diameter of 6 µm), 30.2 parts by weight of silicon carbide particles having an average particle diameter of 0.3 µm serving as inorganic particles, 7 parts by weight of silica sol serving as an inorganic binder (with an SiO₂ content of 30 parts by weight in the sol), 0.5 parts by weight of carboxymethyl cellulose serving as an organic binder, and 39 parts by weight of water were mixed and kneaded to prepare an outer coating layer formation paste. In example 1, the outer coating layer formation paste has the same composition as the filling layer formation paste.

Next, the outer coating layer formation paste was applied to the outer surface of the honeycomb block. The honeycomb block was then dried for one hour at 120°C to harden the outer coating layer formation paste. As a result, the outer coating layer 34 was formed. In this way, the cylindrical honeycomb structured body 21 having a diameter of 143 mm and a length of 150 mm was obtained. Table 1 shows the structure of the honeycomb structured body 21 of example 1 in detail.

### (Test Examples 2 to 10)

As shown in Figs. 2 and 6, 16 honeycomb members 22 manufactured in the same manner as in example 1 were bonded into a bundle, or an aggregation S. Filling layers 35 were arranged at predetermined positions of the aggregation S, and the aggregation S was cut to have a predetermined shape. As a result, a honeycomb structured body 21 having a circular vertical cross-section was obtained. Table 1 shows the structure of the honeycomb structured bodies 21 of examples 2 to 10 in detail.

### (Test Examples 11 to 13)

Thirty-two honeycomb members 22 manufactured in the same manner as in example 1 were bonded into a bundle, or an aggregation S. Filling layers 35 were arranged at predetermined positions of the aggregation S, and the aggregation S was cut into predetermined shape. As a result, the honeycomb structured body 21 having a circular vertical cross-section was obtained (refer to Fig. 9). Table 1 shows the structure of this honeycomb structured body in detail.

### (Test Examples 14 and 15)

Sixteen honeycomb members 22 manufactured in the same manner as in example 1 were bonded into a bundle, or an aggregation S. Filling layers 35 were arranged at predetermined positions of the aggregation S, and the aggregation S was cut into a predetermined shape. As a result, the honeycomb structured body 21 having an oval vertical cross-section was obtained (refer to Fig. 7). Table 1 shows the structure of this honeycomb structured body in detail.

### (Test Example 16)

Sixteen (4 by 4) honeycomb members 22 manufactured in the same manner as in example 1 were bonded into a bundle, or an aggregation S. The aggregation S was cut with a diamond cutter to form a honeycomb block having a diameter of 142 mm including flat portions 32. The honeycomb block formed in example 16 underwent cutting before the filling layers were formed. Thus, this honeycomb block had an outer surface identical to the outer surface of the filter peripheral portion 21B shown in Fig. 2D.

Next, the honeycomb block was accommodated in a cylindrical jig having a diameter of 143 mm and a length of 150 mm. The jig was then arranged in a paste supply chamber connected to a bonding material paste supply apparatus. The jig has two semi-cylindrical components, which are made of a stainless (SUS), and the components of the jig are separable. The jig defines a gap of 1 mm with the curved outer surface of the honeycomb block. The bonding material paste supply apparatus has a plurality of nozzles at positions corresponding to the gap formed between the jig and the honeycomb block. A paste having the same composition as the outer coating layer formation paste of test example 1 was injected from the nozzles into the gap between the jig and the honeycomb block.

The honeycomb block accommodated in the jig was removed from the paste supply chamber and dried for one hour at 120°C to harden the paste. In this way, the filling layers 35 and the outer coating layer 34 were formed simultaneously. As a result, the cylindrical-shape honeycomb structured body 21 having a diameter of 143 mm and a length of 150 mm was obtained. Table 1 shows the structure of the honeycomb structured body 21 of test example 16 in detail.

### (Test Example 17)

A plurality of honeycomb members having rectangular pillar shapes (first honeycomb members 22A) and a plurality of honeycomb members having various irregular shape cross-sections (second honeycomb members 22B) were formed by extrusion in test example 17 although the aggregation was cut with a diamond cutter in test example 1. The composition of each honeycomb member is the same as in example 1. Extruded bodies of the second honeycomb members 22B having various irregular shape cross-sections are formed in the same manner as extruded bodies of the first honeycomb members 22A simply by using dies having desired shapes instead of a die used to form the extruded bodies of the first honeycomb members 22A. Refer to test example 1 for the drying and sintering processes of the extruded bodies.

The honeycomb members 22A and 22B were bonded using the bonding material 24 in the same manner as in example 1 to form a honeycomb block having a diameter of 142 mm including flat portions 32. The filling layers 35 and the outer coating layer 34 were formed simultaneously in the same manner as in example 16. Table 1 shows the structure of the honeycomb structured body 21 of test example 17 in detail.

### (Comparative Example 1)

In comparative example 1, the honeycomb structured body was manufactured using 20 honeycomb members 22 as shown in Fig. 6. The honeycomb structured body of comparative example 1 does not include the filling layers 35 formed in test examples 1 to 10. Table 1 shows the structure of this honeycomb structured body in detail.

### (Comparative Example 2)

In comparative example 2, the honeycomb structured body was manufactured using thirty-six honeycomb members 22 as shown in Fig. 9. The honeycomb structured body of comparative example 2 does not include the filling layers 35 of test examples 11 to 13. Table 1 shows the structure of this honeycomb structured body in detail.

### (Comparative Example 3)

As shown in Fig. 10, forty-five honeycomb members 22 were bonded into a bundle. The bundle of the honeycomb members 22 was then cut to obtain the honeycomb structured body having a circular vertical cross-section. The honeycomb structured body 21 of comparative example 3 includes honeycomb members 22B that need to be replaced by filling layers 35, that is, honeycomb members 22B having extremely small vertical cross-sectional areas, in its filter peripheral portion 21B. Table 1 shows the structure of this honeycomb structured body in detail.

### (Comparative Example 4)

In the same manner as in test example 1, sixteen (4 by 4) honeycomb members 22 were bonded into an aggregation using a bonding material 24. Without forming the filling layers, the aggregation was cut with a diamond cutter to form a honeycomb block having a diameter of 142 mm including four flat portions 32 as shown in Fig. 2D. The outer coating layer formation paste used in test example 1 was applied to the outer surface of the honeycomb block. The thickness of the outer coating layer was adjusted to 0.5 mm using a rubber squeegee. As a result, the honeycomb structured body having four flat portions was formed. The honeycomb structured body of comparative example 4 has an outer surface substantially the same as the outer surface of the filter peripheral portion 21B shown in Fig. 2D.

Aggregation Dimensions: The dimension of the aggregation is expressed using the diameter (φ) × the length (L).

Filling Layer Positions: Refer to Fig. 2A and Fig. 9 for the angular values used in test examples 1 to 13, 16, and 17 and comparative examples 1 to 4. Refer to Fig. 7 for the angular values used in test examples 14 and 15.

Vertical Cross-sectional Area of Second Honeycomb Member: The smallest value of the vertical cross-sectional areas of the second honeycomb members 22 forming the filter peripheral portion 21B is used. The values shown in Table 1 are in cm².

### <Physical Evaluation of Filling Layer>

The filling layers 35 (in particular the inorganic fibers contained in the filling layers 35) arranged in the honeycomb structured bodies 21 of the test examples and comparative examples above were physically evaluated using the items below. Table 2 shows the results of the physical evaluation.
(1) Average Fiber Diameter of Inorganic Fibers: The average fiber diameter of 100 inorganic fibers randomly selected from a micrograph showing the cross-section of the filling layer 35 obtained using a scanning electron microscope was calculated.
(2) Average Fiber Length of Inorganic Fibers: The average fiber length of 100 inorganic fibers randomly selected from a micrograph showing the cross-section of the filling layer 35 obtained using a scanning electron microscope was calculated.
(3) Tap Density of Inorganic Fibers: The tap density was measured with a constant capacity measurement method according to JIS R 1628-1997 defining "the test methods for bulk density of fine ceramic powder".

### <Evaluation Test of Honeycomb Structure>

### (Evaluation 1: Clogging State)

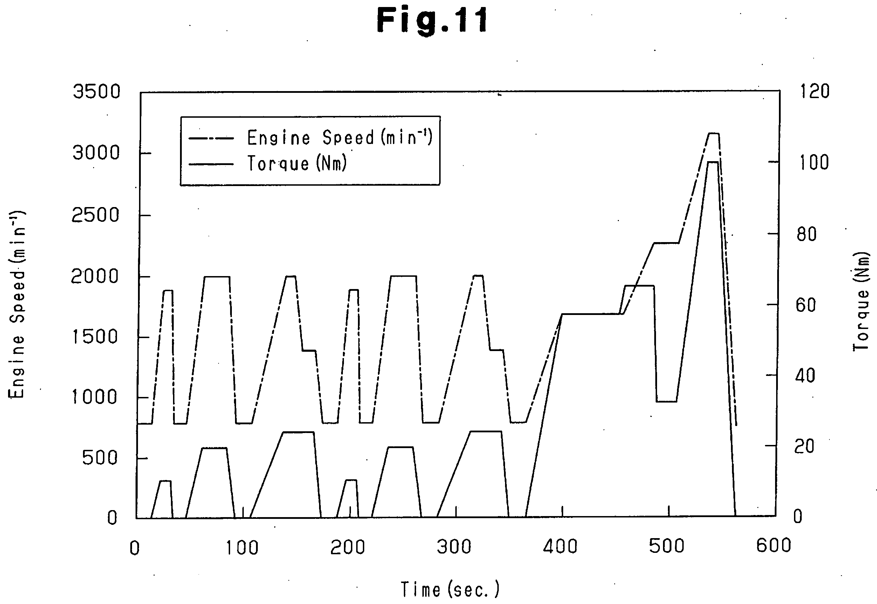

An exhaust gas purification test of the honeycomb structured body 21 for each of the examples was conducted. The honeycomb structured body 21 was first set in the exhaust gas purification device 10. The engine was then driven for 600 seconds while the engine speed (revolution speed) and the torque of the engine were changed as shown in Fig. 11. After that, the same test was repeated until the cells 28 of the second honeycomb members 22B forming the filter peripheral portion 21B were clogged by PM. The number of times the test was repeated until the second honeycomb members 22B were clogged was recorded. The clogging state was then evaluated according to the criteria described below. Table 2 shows the results of this evaluation.

Symbol "○" indicates that no clogging was observed in the second honeycomb members after the purification test was repeated 150 times or more. Symbol "×" indicates that clogging was observed in the second honeycomb members when the purification test was repeated fifty times.

The clogging state is discussed in association with values of the ratio of to the vertical cross-sectional area S2 of the second honeycomb member 22B to the vertical cross-sectional area S0 of the first honeycomb member 22A (S2/S0).

### (Evaluation 2: Durability of Filling Layer)

The state of the filling layers after the purification test of evaluation 1 was repeated 150 times was evaluated by visual inspection based on the criteria described below. Table 2 shows the results of this evaluation.

Symbol "○" indicates that no change was observed. Symbol "Δ" indicates that the filling layers cracked slightly. Symbol "×" indicates that the filling layers peeled off.

The durability of the filling layers is discussed in association with values of the ratio of the vertical cross-sectional area S1 of the filling layer 35 to the vertical cross-sectional area S0 of the first honeycomb member 22A (S1/S0) or in association with properties of the inorganic fibers contained in the filling layers. In Table 2, symbol "*" shows that the evaluation was not performed because the number of times the test was conducted until the second honeycomb members 22B were clogged was too small to correctly evaluate the durability of the filling layers.

For the honeycomb structured body of comparative example 4, the exhaust gas leaked during the measurements for evaluations 1 and 2. Thus, evaluations 1 and 2 were not performed for the honeycomb structured body of comparative example 4. A possible cause for the gas leakage is a gap between the four flat portions on the outer surface of the honeycomb structured body and the heat insulator 19 that was formed when the honeycomb structured body was set in the casing 18. The flat portions lower the supporting strength of the honeycomb structured body that is supported using the heat insulator 19. Thus, even when the honeycomb structured body is fastened tightly using the heat insulator 19, it is impossible to completely prevent the honeycomb structured body from moving or vibrating, or to prevent the gas from leaking from the honeycomb structured body. In this respect, the honeycomb structured bodies of test examples 1 to 17 without flat portions are prevented from having such movement, vibration, and gas leakage.

As shown in Table 2, for the honeycomb structured bodies of test examples 1 to 17, the value of S2/S0 is 4% or more. No clogging was observed in the second honeycomb members 22 forming the filter peripheral portion 21B of these honeycomb structured bodies. This is considered to be because each second honeycomb member 22B forming the filter peripheral portion 21B was set to have a capacity (corresponding to the vertical cross-sectional area) for retaining an amount of heat large enough to sufficiently remove PM. For the honeycomb structured bodies of comparative examples 1 to 4, the value of S2/S0 is less than 4%, and the filter peripheral portion 21B includes honeycomb members having extremely small vertical cross-sectional areas. Thus, such honeycomb members having extremely small vertical cross-sectional areas failed to sufficiently remove PM and caused their cells 28 to be clogged by the PM.

For the honeycomb structured bodies of test examples 1 to 5 and test examples 11 to 17, no change was observed in the state of the filling layers 35 after the cycle test. This is considered to be because the filling layers 35 containing the inorganic fibers having an average fiber diameter of 1 to 40 µm, an average fiber length of 10 to 200 µm, and a tap density of 55 to 65 g/cm³ had sufficiently high heat resistance and sufficiently high strength, and thereby had high durability.

For the honeycomb structured bodies of test examples 7 to 10, the filling layers 35 cracked slightly. This is considered to be because the filling layers 35 did not contain inorganic fibers, or the inorganic fibers contained in the filling layers 35 failed to satisfy the above predetermined range for average fiber diameter, average fiber length, or the tap density of the inorganic fibers, and thereby had insufficiently high heat resistance and an insufficiently high strength. Further, for the honeycomb structured bodies of test examples 6 and 15, the filling layers 35 peeled off. This is considered to be because the value of S1/S0 was 4% or more in the honeycomb structured bodies of test examples 6 and 15, and the filling layers 35 of these honeycomb structured bodies had extremely large vertical cross-sectional areas as compared with other test examples. In this case, the temperature of the filling layers 35 varied greatly and the internal heat stress of the filling layers 35 increased excessively during heating using the exhaust. As a result, the filling layers 35 peeled off. Further, the results of comparative example 14 reveal that the filling layers 35 have a sufficiently high durability when the value of S1/S0 is less than 9%.

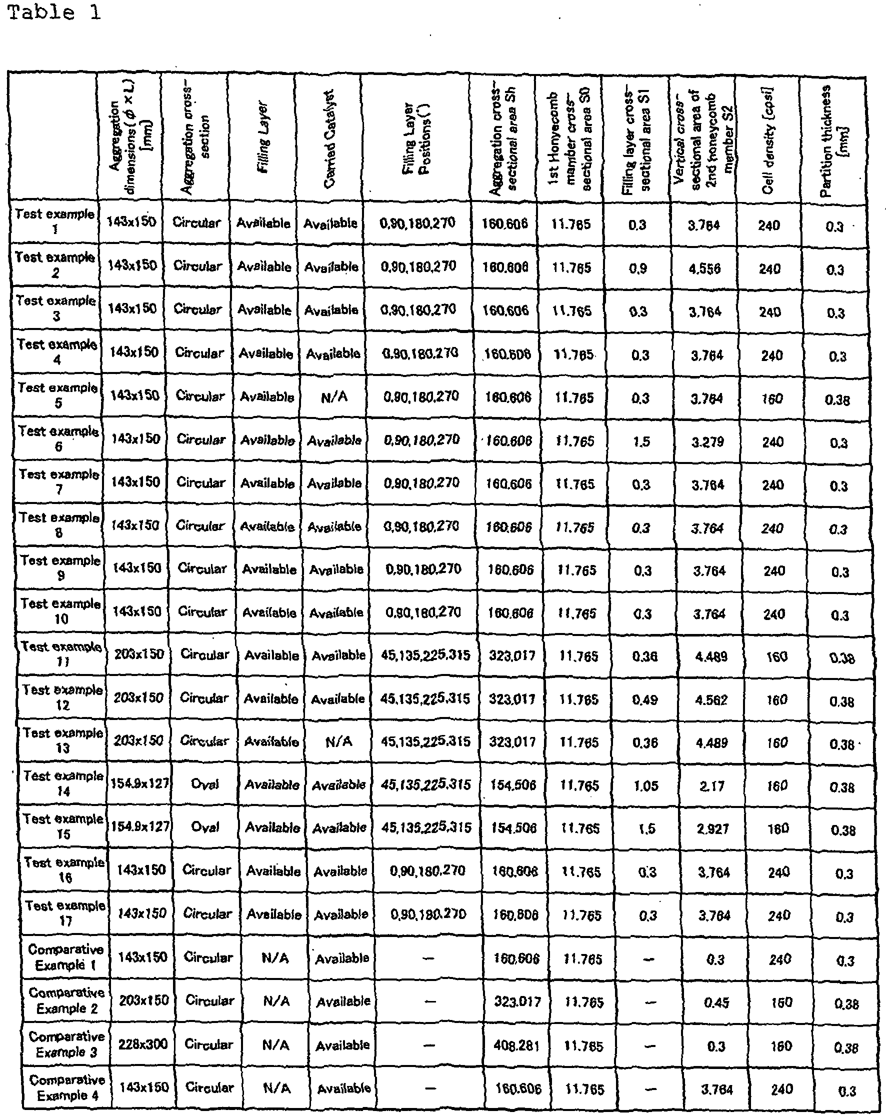

**Table 2**

| | S2/S0 [%] | S1/S0 [%] | Filling layer composition | Average fiber diameter [µ m] | Average fiber length [µ m] | Tap density [g/cm³] | Evaluation 1 | Evaluation 2 |
|---|---|---|---|---|---|---|---|---|
| Test example 1 | 31.99 | 2.55 | Inorganic particles, inorganic fibers | 6 | 20 | 58 | ○ | ○ |
| Test example 2 | 38.73 | 7.65 | Inorganic particles, inorganic fibers | 6 | 20 | 58 | ○ | ○ |
| Test example 3 | 31.99 | 2.55 | Inorganic particles, inorganic hollow body | - | - | - | ○ | ○ |
| Test example 4 | 31.99 | 2.55 | Same as outer coating layer | 6 | 20 | 58 | ○ | ○ |
| Test example 5 | 31.99 | 2.55 | Inorganic particles, inorganic fibers | 6 | 20 | 58 | ○ | ○ |
| Test example 6 | 27.87 | 12.75 | Inorganic particles, inorganic fibers | 6 | 20 | 58 | ○ | × |
| Test example 7 | 31.99 | 2.55 | Inorganic particles | - | - | - | ○ | Δ |
| Test example 8 | 31.99 | 2.55 | Inorganic particles, inorganic fibers | 6 | 28 | 75 | ○ | Δ |
| Test example 9 | 31.99 | 2.55 | Inorganic particles, inorganic fibers | 50 | 200 | 36 | ○ | Δ |
| Test example 10 | 31.99 | 2.55 | Inorganic particles, inorganic fibers | 50 | 200 | 36 | ○ | Δ |
| Test example 11 | 38.16 | 3.06 | Inorganic particles, inorganic fibers | 6 | 20 | 58 | ○ | ○ |
| Test example 12 | 38.78 | 4.17 | Inorganic particles, inorganic fibers | 6 | 20 | 58 | ○ | ○ |
| Test example 13 | 38.16 | 3.06 | Inorganic particles, inorganic fibers | 6 | 20 | 58 | ○ | ○ |
| Test example 14 | 18.45 | 8.9 | Inorganic particles, inorganic fibers | 6 | 20 | 58 | ○ | ○ |
| Test example 15 | 24.88 | 12.75 | Inorganic particles, inorganic fibers | 6 | 20 | 58 | ○ | ○ |
| Test example 16 | 31.99 | 2.55 | Inorganic particles, inorganic fibers | 6 | 20 | 58 | ○ | ○ |
| Test example 17 | 31.99 | 2.55 | Inorganic particles, inorganic fibers | 6 | 20 | 58 | ○ | ○ |
| Comparative Example 1 | 2.55 | - | Inorganic particles, inorganic fibers | 6 | 20 | 58 | × | * |
| Comparative Example 2 | 3.82 | - | Inorganic particles, inorganic fibers | 6 | 20 | 58 | × | * |
| Comparative Example 3 | 2.54 | - | Inorganic particles, inorganic fibers | 6 | 20 | 58 | × | * |
| Comparative Example 4 | 31.99 | - | Inorganic particles, inorganic fibers | 6 | 20 | 58 | * | * |

## Claims

1. A honeycomb structured body (21) including a plurality of honeycomb members (22) bonded together by a bonding material (24), each honeycomb member including an outer wall (26), a partition (27) arranged inward from the outer wall (26), and a plurality of cells (28) partitioned by the partition for functioning as a flow passage for a fluid; and an outer surface formed by an outer coating layer (34); the honeycomb structured body comprising:
a filter core portion (21 A) including a plurality of first honeycomb members of the plurality of honeycomb members, each of the first honeycomb members having a vertical cross-section that is orthogonal to an axis of the honeycomb structured body and rectangular;
a filter peripheral portion (21B) arranged outside the filter core portion and formed by a plurality of second honeycomb members of the plurality of honeycomb members, each of the second honeycomb members having a vertical cross-section that is orthogonal to the axis and irregular in shape, wherein the filter core portion and the filter peripheral portion form an aggregation (S);
**characterized in that**
a filling layer (35) selectively filled in parts of the filter peripheral portion (21B) that are recessed from a hypothetical contour line of the filter peripheral portion (21B) between the outer coating layer and an outer surface of either one of the filter core portion and the filter peripheral portion.

2. The honeycomb structured body according to claim 1, **characterized in that** when representing a cross-sectional area of the vertical cross-section of each first honeycomb member with S0 and representing a cross-sectional area of a vertical cross-section of the filling layer orthogonal to the axis with S1, a ratio of the area S1 to the area S0 is less than 4%.

3. The honeycomb structured body according to claim 1 or 2, wherein the filling layer (35) is one of a plurality of filling layers arranged on the outer surface of the honeycomb structured body (21) at equiangular intervals about the axis.

4. The honeycomb structured body (21) according to claim 3, wherein the outer surface has a 0-degree position on an extension of the outer wall of one of the first honeycomb members that is adjacent to the center of the honeycomb structured body, and a 90-degree position, a 180-degree position, and a 270-degree position that are respectively separated from the 0-degree position by 90 degrees, 180 degrees, and 270 degrees about the center, the honeycomb structured body (21) being **characterized in that** the filling layers (35) are arranged at the 0-degree position, the 90-degree position, the 180-degree position, and the 270-degree position.

5. The honeycomb structured body (21) according to claim 3, further **characterized by**:
a peripheral surface extending parallel to the axis, and the peripheral surface includes a 0-degree position on an extension of the outer wall of one of the first honeycomb members that is adjacent to the center of the honeycomb structured body (21), and a 45-degree position, a 135-degree position, a 225-degree position, and a 315-degree position that are respectively separated from the 0-degree position by 45 degrees, 135 degrees, 225 degrees, and 315 degrees about the center, the honeycomb structured body (21) being **characterized in that** the filling layers (35) are arranged at the 45-degree position, the 135-degree position, the 225-degree position, and the 315-degree position.

6. The honeycomb structured body (21) according to any one of claims 1 to 5, **characterized in that** the filling layer (35) is arranged in part of the outer surface to extend between end surfaces of the honeycomb structured body (21) along the axis.

7. The honeycomb structured body (21) according to any one of claims 1 to 6, **characterized in that** the filling layer (35) contains inorganic particles.

8. The honeycomb structured body (21) according to any one of claims 1 to 7, **characterized in that** the filling layer (35) contains either one of inorganic fibers and inorganic hollow bodies.

9. The honeycomb structured body (21) according to claim 8, **characterized in that** the inorganic fibers have an average fiber diameter of 1 to 40 µm and an average fiber length of 10 to 200 µm.

10. The honeycomb structured body (21) according to claim 9, **characterized in that** the inorganic fibers have an average fiber diameter of 6 to 40 µm.

11. The honeycomb structured body (21) according to any one of claims 8 to 10, **characterized in that** the inorganic fibers have a tap density of 55 to 65 g/cm³.

12. The honeycomb structured body (21) according to any one of claims 1 to 11, **characterized in that** the filling layer (35) has a composition identical to that of the outer coating layer (34).

13. The honeycomb structured body (21) according to any one of claims 1 to 12, **characterized in that** each honeycomb member (22) has a cell density of 200 to 300 cells per square inch.

14. The honeycomb structured body (21) according to any one of the claims 1 to 13, **characterized in that** the partition (27) has a thickness of 0.33 mm or less.

15. The honeycomb structured body (21) according to any one of the claims 1 to 14, **characterized in that** the vertical cross-section orthogonal to the axis is circular or oval.

16. The honeycomb structured body (21) according to any one of the claims 1 to 15, further **characterized by** a catalyst carried by the partition (27).

17. A method for manufacturing a honeycomb structured body (21), the method **characterized by**:
an aggregation formation step configured to bond a plurality of honeycomb members (22) into an aggregation (S) with a bonding material (24), wherein each honeycomb member has an outer wall (26), a partition (27) arranged inward from the outer wall, and a plurality of cells (28) partitioned by the partition for functioning as a flow passage for a fluid, the aggregation including a filter core portion (21 A) formed by a plurality of first honeycomb members of the plurality of honeycomb members and a filter peripheral portion (21B) arranged outside the filter core portion and formed by a plurality of second honeycomb members of the plurality of honeycomb members, each of the first honeycomb members having a vertical cross-section that is orthogonal to an axis of the honeycomb structured body and rectangular, and each of the second honeycomb members having a vertical cross-section that is orthogonal to the axis and irregular in shape;
a filling layer (35) formation step configured to selectively arrange a filling layer at a predetermined position on an outer surface of the aggregation; and filled in parts of the filter peripheral portion (21B) that are recessed from a hypothetical contour line of the filter peripheral portion (21B); and
an outer coating layer (34) formation step configured to form an outer coating layer (34) on the outer surface of the aggregation (S).

18. The method according to claim 17, further **characterized by** a cutting step configured to cut the outer surface of the aggregation.

19. The method according to claim 18, **characterized in that** the aggregation formation step, the filling layer formation step, the cutting step, and the outer coating layer formation step are performed in this order.

20. The method according to claim 18, **characterized in that** the filling layer formation step and the outer coating layer formation step are performed after the aggregation formation step and the cutting step are performed.

21. The method according to claim 20, **characterized in that** the filing layer formation step and the outer coating layer formation step are performed simultaneously.

22. The method according to claim 17, **characterized in that** when each of the honeycomb members (22) is formed into a predetermined shape in advance, the filling layer formation step and the outer coating layer formation step are performed after the aggregation formation step is performed.

23. The method according to claim 22, **characterized in that** the filling layer formation step and the outer coating layer formation step are simultaneously performed.

## Patentansprüche

1. Wabenstrukturkörper (21) mit mehreren Wabenelementen (22), die miteinander durch ein Bindematerial (24) verbunden sind, wobei jedes Wabenelement eine äußere Wand (26), eine Trennung (27) angeordnet innerhalb der äußeren Wand (26) und mehrere Zellen (28) getrennt durch die Trennung zum Fungieren als eine Strömungspassage für ein Fluid und eine äußere Fläche ausgebildet durch eine äußere Beschichtungsschicht (34) aufweist; wobei der Wabenstrukturkörper aufweist:
einen Filterkernabschnitt (21A), der mehrere erste Wabenelemente der mehreren Wabenelemente aufweist, wobei jedes der ersten Wabenelemente einen vertikalen Querschnitt aufweist, der orthogonal zu einer Achse des Wabenstrukturkörpers und rechteckig ist;
einen Filterumfangsabschnitt (21B), der außerhalb des Filterkernabschnitts angeordnet ist und aus mehreren zweiten Wabenelementen der mehreren Wabenelemente ausgebildet ist, wobei jedes der zweiten Wabenelemente einen vertikalen Querschnitt aufweist, der orthogonal zu der Achse und von unregelmäßiger Form ist, wobei der Filterkernabschnitt und der Filterumfangsabschnitt ein Aggregat (S) ausbilden;
**gekennzeichnet durch**
eine Füllschicht (35), die selektiv in Teile des Filterumfangsabschnitts (21B) gefüllt ist, die von einer hypothetischen Konturlinie des Filterumfangsabschnitts (21B) zwischen der äußeren Beschichtungsschicht und einer äußeren Fläche des Filterkernabschnitts oder des Filterumfangsabschnitts zurückgesetzt sind.

2. Wabenstrukturkörper nach Anspruch 1, **dadurch gekennzeichnet, dass**
wenn eine Querschnittsfläche des vertikalen Querschnitts jedes ersten Wabenelements durch S0 repräsentiert wird und eine Querschnittsfläche eines vertikalen Querschnitts der Füllschicht orthogonal zu der Achse durch S1 repräsentiert wird, ein Verhältnis der Fläche S1 zu der Fläche S0 weniger als 4% beträgt.

3. Wabenstrukturkörper nach Anspruch 1 oder 2, wobei
die Füllschicht (35) eine aus mehreren Füllschichten angeordnet auf der äußeren Fläche des Wabenstrukturkörpers (21) an gleichwinkligen Intervallen um die Achse ist.

4. Wabenstrukturkörper (21) nach Anspruch 3, wobei
die äußere Fläche eine 0-Grad-Position an einer Erweiterung der äußeren Wand eines der ersten Wabenelemente, das an die Mitte des Wabenstrukturkörpers angrenzt und eine 90-Grad-Position, eine 180-Grad-Position und eine 270-Grad-Position aufweist, die von der 0-Grad-Position entsprechend um 90 Grad, 180 Grad und 270 Grad um die Mitte getrennt sind, wobei der Wabenstrukturkörper (21) **dadurch gekennzeichnet ist, dass** die Füllschichten (35) an der 0-Grad-Position, der 90-Grad-Position, der 180-Grad-Position und der 270-Grad-Position angeordnet sind.

5. Wabenstrukturkörper (21) nach Anspruch 3, ferner **gekennzeichnet, durch**
eine Umfangsfläche, die sich parallel zu der Achse erstreckt und wobei die Umfangsfläche eine 0-Grad-Position an einer Erweiterung der äußeren Wand eines der ersten Wabenelemente, das an die Mitte des Wabenstrukturkörpers (21) angrenzt und eine 45-Grad-Position, eine 135-Grad-Position, eine 225-Grad-Position und eine 315-Grad-Position aufweist, die von der 0-Grad-Position entsprechend um 45 Grad, 135 Grad, 225 Grad und 315 Grad um die Mitte getrennt sind, wobei der Wabenstrukturkörper (21) **dadurch** gekennzeichnet ist, dass die Füllschichten (35) an der 45-Grad-Position, der 135-Grad-Position, der 225-Grad-Position und der 315-Grad-Position angeordnet sind.

6. Wabenstrukturkörper (21) nach einem der Ansprüche 1 bis 5, **dadurch gekennzeichnet, dass**
die Füllschicht (35) so in einem Teil der äußeren Fläche angeordnet ist, dass sie sich zwischen den Endflächen des Wabenstrukturkörpers (21) entlang der Achse erstreckt.

7. Wabenstrukturkörper (21) nach einem der Ansprüche 1 bis 6, **dadurch gekennzeichnet, dass**
die Füllschicht (35) anorganische Partikel aufweist.

8. Wabenstrukturkörper (21) nach einem der Ansprüche 1 bis 7, **dadurch gekennzeichnet, dass**
die Füllschicht (35) anorganische Fasern oder anorganische Hohlkörper aufweist.

9. Wabenstrukturkörper (21) nach Anspruch 8, **dadurch gekennzeichnet, dass**
die anorganischen Fasern einen mittleren Faserdurchmesser von 1 bis 40 µm und eine mittlere Faserlänge von 10 bis 200 µm aufweisen.

10. Wabenstrukturkörper (21) nach Anspruch 9, **dadurch gekennzeichnet, dass**
die anorganischen Fasern einen mittleren Faserdurchmesser von 6 bis 40 µm aufweisen.

11. Wabenstrukturkörper (21) nach einem der Ansprüche 8 bis 10, **dadurch gekennzeichnet, dass**
die anorganischen Fasern eine Rütteldichte von 55 bis 65 g/cm³ aufweisen.

12. Wabenstrukturkörper (21) nach einem der Ansprüche 1 bis 11, **dadurch gekennzeichnet, dass**
die Füllschicht (35) eine Zusammensetzung aufweist, die identisch ist zu der, der äußeren Beschichtungsschicht (34).

13. Wabenstrukturkörper (21) nach einem der Ansprüche 1 bis 12, **dadurch gekennzeichnet, dass**
jedes Wabenelement (22) eine Zelldichte von 200 bis 300 Zellen pro Quadratzoll aufweist.

14. Wabenstrukturkörper (21) nach einem der Ansprüche 1 bis 13, **dadurch gekennzeichnet, dass**
die Trennung (27) eine Dicke von 0,33 mm oder weniger aufweist.

15. Wabenstrukturkörper (21) nach einem der Ansprüche 1 bis 14, **dadurch gekennzeichnet, dass**
der vertikale Querschnitt orthogonal zu der Achse kreisförmig oder oval ist.

16. Wabenstrukturkörper (21) nach einem der Ansprüche 1 bis 15, ferner **gekennzeichnet, durch**
einen **durch** die Trennung (27) getragenen Katalysator.

17. Verfahren zur Herstellung eines Wabenstrukturkörpers (21), wobei das Verfahren **gekennzeichnet ist durch**:
einen Schritt des Ausbildens eines Aggregats, der ausgestaltet ist, um mehrere Wabenelemente (22) mit einem Bindematerial (24) zu einem Aggregat (S) zu verbinden, wobei jedes Wabenelement eine äußere Wand (26), eine Trennung (27) angeordnet innerhalb der äußeren Wand und mehrere Zellen (28) getrennt **durch** die Trennung zum Fungieren als eine Strömungspassage für ein Fluid aufweist, das Aggregat einen Filterkernabschnitt (21A) ausgebildet **durch** mehrere erste Wabenelemente der mehreren Wabenelemente und einen Filterumfangsabschnitt (21B) angeordnet außerhalb des Filterkernabschnitts und ausgebildet **durch** mehrere zweite Wabenelemente der mehreren Wabenelemente aufweist, jedes der ersten Wabenelemente einen vertikalen Querschnitt aufweist, der orthogonal zu einer Achse des Wabenstrukturkörpers und rechteckig ist und jedes der zweiten Wabenelemente einen vertikalen Querschnitt aufweist, der orthogonal zu der Achse und von irregulärer Form ist;
einen Schritt des Ausbildens einer Füllschicht (35), der ausgestaltet ist, um selektiv eine Füllschicht an einer vorbestimmten Positionen auf einer äußeren Fläche des Aggregats und gefüllt in Teile des Filterumfangsabschnitts (21B), welche von einer hypothetischen Konturlinie des Filterumfangsabschnitts (21B) zurückgesetzt sind, anzuordnen; und
einen Schritt des Ausbildens einer äußeren Beschichtungsschicht (34), der ausgestaltet ist, um eine äußere Beschichtungsschicht (34) auf der äußeren Fläche des Aggregats (S) auszubilden.

18. Verfahren nach Anspruch 17, ferner **gekennzeichnet durch**
einen Schneidschritt, der ausgestaltet ist, um die äußere Fläche des Aggregats zu schneiden.

19. Verfahren nach Anspruch 18, **dadurch gekennzeichnet, dass**
der Schritt des Ausbildens eines Aggregats, der Schritt des Ausbildens einer Füllschicht, der Schneidschritt und der Schritt des Ausbildens einer äußeren Beschichtungsschicht in dieser Reihenfolge durchgeführt werden.

20. Verfahren nach Anspruch 18, **dadurch gekennzeichnet, dass**
der Schritt des Ausbildens einer Füllschicht und der Schritt des Ausbildens einer äußeren Beschichtungsschicht nach dem Schritt des Ausbildens eines Aggregats und dem Schneidschritt durchgeführt werden.

21. Verfahren nach Anspruch 20, **dadurch gekennzeichnet, dass**
der Schritt des Ausbildens einer Füllschicht und der Schritt des Ausbildens einer äußeren Beschichtungsschicht gleichzeitig durchgeführt werden.

22. Verfahren nach Anspruch 17, **dadurch gekennzeichnet, dass**
wenn jedes der Wabenelemente (22) zuvor in eine vorbestimmte Form gebracht wird, der Schritt des Ausbildens einer Füllschicht und der Schritt des Ausbildens einer äußeren Beschichtungsschicht durchgeführt werden, nachdem der Schritt des Ausbildens eines Aggregats durchgeführt wird.

23. Verfahren nach Anspruch 22, **dadurch gekennzeichnet, dass**
der Schritt des Ausbildens einer Füllschicht und der Schritt des Ausbildens einer äußeren Beschichtungsschicht gleichzeitig durchgeführt werden.

## Revendications

1. Corps structuré en nid d'abeilles (21) comprenant une pluralité d'éléments en nid d'abeilles (22) liés ensemble par un matériau de liaison (24), chaque élément en nid d'abeilles comprenant une paroi extérieure (26), une séparation (27) agencée vers l'intérieur depuis la paroi extérieure (26) et une pluralité de cellules (28) séparées par la séparation pour fonctionner comme passage d'écoulement pour un fluide ; et une surface extérieure formée par une couche de revêtement extérieure (34) ; le corps structuré en nid d'abeilles comprenant :
une partie de coeur filtrante (21A) comprenant une pluralité de premiers éléments en nid d'abeilles de la pluralité d'éléments en nid d'abeilles, chacun des premiers éléments en nid d'abeilles présentant une section transversale verticale qui est orthogonale à un axe du corps structuré en nid d'abeilles et rectangulaire ;
une partie périphérique filtrante (21B) agencée en dehors de la partie de coeur filtrante et formée par une pluralité de seconds éléments en nid d'abeilles de la pluralité d'éléments en nid d'abeilles, chacun des seconds éléments en nid d'abeilles présentant une section transversale verticale qui est orthogonale à l'axe et de forme irrégulière, dans lequel la partie de coeur filtrante et la partie périphérique filtrante forment une agglomération (S) ;
**caractérisé en ce qu'**une couche de remplissage (35) est sélectivement remplie dans des parties de la partie périphérique filtrante (21B) qui sont évidées depuis une ligne de contour hypothétique de la partie périphérique filtrante (21B) entre la couche de revêtement extérieure et une surface extérieure de l'une ou l'autre de la partie de coeur filtrante et la partie périphérique filtrante.

2. Corps structuré en nid d'abeilles selon la revendication 1, **caractérisé en ce que**, lorsque l'on représente e la surface en section transversale de la section transversale verticale de chaque premier élément en nid d'abeilles par S0 et la surface en section transversale de la section transversale verticale de la couche de remplissage orthogonale à l'axe par S1, le rapport de la surface S1 à la surface S0 est inférieur à 4 %.

3. Corps structuré en nid d'abeilles selon la revendication 1 ou 2, dans lequel la couche de remplissage (35) est l'une d'une pluralité de couches de remplissage agencées sur la surface extérieure du corps structuré en nid d'abeilles (21) à intervalles équiangulaires autour de l'axe.

4. Corps structuré en nid d'abeilles (21) selon la revendication 3, dans lequel la surface extérieure présente une position à 0 degré sur une extension de la paroi extérieure d'un des premiers éléments en nid d'abeilles qui est adjacent au centre du corps structuré en nid d'abeilles et une position à 90 degrés, une position à 180 degrés et une position à 270 degrés qui sont séparées respectivement de la position à 0 degré de 90 degrés, 180 degrés et 270 degrés autour du centre, le corps structuré en nid d'abeilles (21) étant **caractérisé en ce que** les couches de remplissage (35) sont agencées dans la position à 0 degré, la position à 90 degrés, la position à 180 degrés et la position à 270 degrés.

5. Corps structuré en nid d'abeilles (21) selon la revendication 3, **caractérisé en outre par** :
une surface périphérique s'étendant parallèlement à l'axe, la surface périphérique comprenant une position à 0 degré sur une extension de la paroi extérieure d'un des premiers éléments en nid d'abeilles qui est adjacent au centre du corps structuré en nid d'abeilles (21), et une position à 45 degrés, une position à 135 degrés, une position à 225 degrés et une position à 315 degrés qui sont respectivement séparées de la position à 0 degré de 45 degrés, 135 degrés, 225 degrés et 315 degrés autour du centre, le corps structuré en nid d'abeilles (21) étant **caractérisé en ce que** les couches de remplissage (35) sont agencées dans la position à 45 degrés, la position à 135 degrés, la position à 225 degrés et la position à 315 degrés.

6. Corps structuré en nid d'abeilles (21) selon l'une quelconque des revendications 1 à 5, **caractérisé en ce que** la couche de remplissage (35) est agencée dans la partie de la surface extérieure pour s'étendre entre des surfaces d'extrémité du corps structuré en nid d'abeilles (21) le long de l'axe.

7. Corps structuré en nid d'abeilles (21) selon l'une quelconque des revendications 1 à 6, **caractérisé en ce que** la couche de remplissage (35) contient des particules inorganiques.

8. Corps structuré en nid d'abeilles (21) selon l'une quelconque des revendications 1 à 7, **caractérisé en ce que** la couche de remplissage (35) contient l'une ou l'autre de fibres inorganiques et de corps creux inorganiques.

9. Corps structuré en nid d'abeilles (21) selon la revendication 8, **caractérisé en ce que** les fibres inorganiques ont un diamètre de fibre moyen de 1 à 40 µm et une longueur de fibre moyenne de 10 à 200 µm.

10. Corps structuré en nid d'abeilles (21) selon la revendication 9, **caractérisé en ce que** les fibres inorganiques ont un diamètre de fibre moyen de 6 à 40 µm.

11. Corps structuré en nid d'abeilles (21) selon l'une quelconque des revendications 8 à 10, **caractérisé en ce que** les fibres inorganiques ont une masse volumique tassée de 55 à 65 g/cm³.

12. Corps structuré en nid d'abeilles (21) selon l'une quelconque des revendications 1 à 11, **caractérisé en ce que** la couche de remplissage (35) a une composition identique à celle de la couche de revêtement extérieure (34).

13. Corps structuré en nid d'abeilles (21) selon l'une quelconque des revendications 1 à 12, **caractérisé en ce que** chaque élément en nid d'abeilles (22) a une densité cellulaire de 200 à 300 cellules par pouce carré.

14. Corps structuré en nid d'abeilles (21) selon l'une quelconque des revendications 1 à 13, **caractérisé en ce que** la séparation (27) a une épaisseur de 0,33 mm ou moins.

15. Corps structuré en nid d'abeilles (21) selon l'une quelconque des revendications 1 à 14, **caractérisé en ce que** la section transversale verticale orthogonale à l'axe est circulaire ou ovale.

16. Corps structuré en nid d'abeilles (21) selon l'une quelconque des revendications 1 à 15, **caractérisé en outre par** un catalyseur supporté par la séparation (27).

17. Procédé de fabrication d'un corps structuré en nid d'abeilles (21), le procédé étant **caractérisé par** :
une étape de formation d'agglomération configurée pour lier une pluralité d'éléments en nid d'abeilles (22) en une agglomération (S) avec un matériau de liaison (24), dans lequel chaque élément en nid d'abeilles a une paroi extérieure (26), une séparation (27) agencée vers l'intérieur depuis la paroi extérieure, et une pluralité de cellules (28) séparées par la séparation pour fonctionner comme passage d'écoulement pour un fluide, l'agglomération comprenant une partie de coeur filtrante (21A) formée par une pluralité de premiers éléments en nid d'abeilles de la pluralité d'éléments en nid d'abeilles et une partie périphérique filtrante (21B) agencée en dehors de la partie de coeur filtrante et formée par une pluralité de seconds éléments en nid d'abeilles de la pluralité d'éléments en nid d'abeilles, chacun des premiers éléments en nid d'abeilles présentant une section transversale verticale qui est orthogonale à un axe du corps structuré en nid d'abeilles et rectangulaire, et chacun des seconds éléments en nid d'abeilles présentant une section transversale verticale qui est orthogonale à l'axe et de forme irrégulière ;
une étape de formation de couche de remplissage (35) configurée pour agencer sélectivement une couche de remplissage dans une position prédéterminée sur une surface extérieure de l'agglomération ; et la remplir dans des parties de la partie périphérique filtrante (21B) qui sont évidées depuis une ligne de contour hypothétique de la partie périphérique filtrante (21B) ; et
une étape de formation de couche de revêtement extérieure (34) configurée pour former une couche de revêtement extérieure (34) sur la surface extérieure de l'agglomération (S).

18. Procédé selon la revendication 17, **caractérisé en outre par** une étape de coupe configurée pour couper la surface extérieure de l'agglomération.

19. Procédé selon la revendication 18, **caractérisé en ce que** l'étape de formation d'agglomération, l'étape de formation de couche de remplissage, l'étape de coupe et l'étape de formation de couche de revêtement extérieure sont réalisées dans cet ordre.

20. Procédé selon la revendication 18, **caractérisé en ce que** l'étape de formation de couche de remplissage et l'étape de formation de couche de revêtement extérieure sont réalisées après la réalisation de l'étape de formation d'agglomération et l'étape de coupe.

21. Procédé selon la revendication 20, **caractérisé en ce que** l'étape de formation de couche de remplissage et l'étape de formation de couche de revêtement extérieure sont réalisées simultanément.

22. Procédé selon la revendication 17, **caractérisé en ce que**, lorsque chacun des éléments en nid d'abeilles (22) est conformé de manière prédéterminée à l'avance, l'étape de formation de couche de remplissage et l'étape de formation de couche de revêtement extérieure sont réalisées après la réalisation de l'étape de formation d'agglomération.

23. Procédé selon la revendication 22, **caractérisé en ce que** l'étape de formation de couche de remplissage et l'étape de formation de couche de revêtement extérieure sont réalisées simultanément.
